(19) Europäisches Patentamt
European Patent Office
Office européen des brevets

(11) Veröffentlichungsnummer: **0 073 007**
**B1**

(12) **EUROPÄISCHE PATENTSCHRIFT**

(45) Veröffentlichungstag der Patentschrift: **27.12.84**

(21) Anmeldenummer: **82107502.5**

(22) Anmeldetag: **18.08.82**

(51) Int. Cl.³: **C 09 K 11/06,** C 09 B 3/22, C 08 J 3/20, C 08 K 5/00 // F21K2/00, F21V9/16

(54) **Verfahren zur flächenmässigen Konzentrierung von Licht und neue fluoreszierende Verbindungen.**

(30) Priorität: **24.08.81 DE 3133390**

(43) Veröffentlichungstag der Anmeldung: **02.03.83 Patentblatt 83/9**

(45) Bekanntmachung des Hinweises auf die Patenterteilung: **27.12.84 Patentblatt 84/52**

(84) Benannte Vertragsstaaten: **CH DE FR GB IT LI**

(56) Entgegenhaltungen: **CH - A - 538 534**
**DE - A - 2 038 637**

(73) Patentinhaber: **BASF Aktiengesellschaft, Carl-Bosch-Strasse 38, D-6700 Ludwigshafen (DE)**

(72) Erfinder: **Seybold, Guenther, Dr., Friedrich-Ebert-Strasse 14, D-6708 Neuhofen (DE)**

EP 0 073 007 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Konzentrierung von Licht mittels fluoreszierender Verbindungen und neue fluoreszierende Verbindungen.

Aus den DE-OS Nrn. 2620115 und 2554226 sind Vorrichtungen bekannt, in denen sichtbares Licht in einer Kunststoffplatte durch eingelagerte Fluoreszenzzentren auf eine kleine Fläche konzentriert werden kann.

Die in diesen Vorrichtungen als Fluoreszenzzentren benötigten Verbindungen müssen insbesondere im Falle der Umwandlung von Lichtenergie in elektrische Energie eine hohe Lichtechtheit aufweisen, damit die Vorrichtungen eine für die Anwendung ausreichende Lebensdauer aufweisen, d.h. die als Fluoreszenzzentren verwendeten Verbindungen müssen in den verwendeten Kunststoffen eine hohe Lichtechtheit aufweisen.

Aus der DE-A Nr. 2038637 sind 6,15-Dialkoxy-5,14-diazaisoviolanthrendione-(9,18) bekannt, die im Alkoxy einen linearen oder verzweigten $C_1$- bis $C_4$-Alkylrest tragen. In den Beispielen 3 und 4 werden 6,15-Di-n-butoxy- und 6,15-Diisobutoxy-5,14-diazaisoviolanthrendion-(9,18) beschrieben. Die Dialkoxydiazaisoviolanthrendione sind unlösliche Küpenfarbstoffe, die sehr brillante blaue Färbungen liefern.

In der CH-A Nr. 538534 werden im Infrarotgebiet fluoreszierende Lösungen beschrieben, die in einem Lösungsmittel 16,17-Dialkoxyviolanthrendion-(5,10) enthalten. Die Alkoxygruppen enthalten Alkylreste mit 1 bis 18 C-Atomen. Die Lösungen dieser 16,17-Dialkoxyviolanthrendione sowie mit diesen Verbindungen gefärbtes Polyesterfasermaterial fluoreszieren bei Wellenlängen oberhalb 700 nm, wenn diese mit Licht von unterhalb 700 nm bestrahlt werden. Eine Anwendung dieser Farbstoffe zur Konzentrierung von Licht ist der Beschreibung nicht zu entnehmen.

Aufgabe der vorliegenden Erfindung war es, für die bekannten Vorrichtungen zur Lichtkonzentrierung als Fluoreszenzzentren geeignete Verbindungen bereitzustellen, die eine hohe Fluoreszenz bei gleichzeitig hoher Lichtechtheit in dem verwendeten Medium aufweisen und die auf das Medium keine nachteilige Wirkung ausüben.

Es wurde gefunden, dass man bei der flächenmässigen Konzentrierung von Licht mittels fluoreszierender Verbindungen in einer Kunststoffplatte oder einer Folie hervorragende Ergebnisse erzielt, wenn man als fluoreszierende Verbindungen solche der Formeln

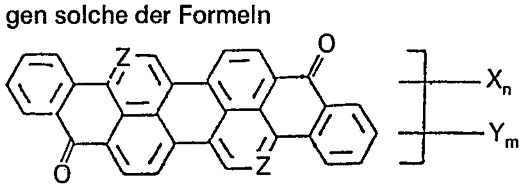
(I)

oder

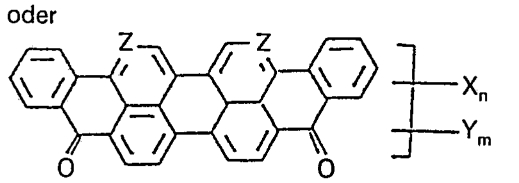
(II)

verwendet, in denen

Z für −N= oder −CH=,

Y für $-OSO_2R^1$, $-O\overset{O}{\overset{\|}{P}}(OR^2)_2$, $-OCOR^1$ oder $-OR^3$, oder 2 Y für

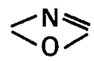 C−R, worin R $C_1$- bis $C_{18}$-Alkyl bedeutet,

X für Fluor, Chlor, $C_1$- bis $C_{20}$-Alkyl, $C_3$- bis $C_{20}$-Alkenyl, Aralkyl, $-COR^1$, $-SO_2R^1$, $-PO(OR^2)_2$, $-NH-COR^1$ oder $-NH-SO_2R^1$,

m für 2, 3 oder 4,

n für 0, 1 oder 2,

$R^1$ für gegebenenfalls durch Fluor substituiertes $C_1$- bis $C_{20}$-Alkyl, $C_3$- bis $C_{20}$-Alkenyl, Aryl oder ein gegebenenfalls durch Chlor, Fluor, Cyan, $C_1$- bis $C_{20}$-Alkyl, $C_1$- bis $C_{20}$-Alkoxy, $C_1$- bis $C_{20}$-Alkoxycarbonyl oder Phenyl substituierter aromatischer oder heteroaromatischer Rest, wobei wenn Y $-OCOR^1$ ist, $R^1$ auch $-OR^{11}$ sein kann, worin $R^{11}$ $C_1$- bis $C_{18}$-Alkyl, durch 1, 2 oder 3 $C_3$- bis $C_{10}$-Alkyl substituiertes Cyclohexyl oder einen Rest eines gesättigten bi- oder polycyclischen $C_7$- bis $C_{30}$-Kohlenwasserstoffs bedeuten oder, wenn X $-COR^1$ ist, $R^1$ auch $C_1$- bis $C_{18}$-Alkoxy sein kann,

$R^2$ für $C_1$- bis $C_{18}$-Alkyl, durch 1 bis 3 $C_3$- bis $C_{10}$-Alkyl substituiertes Cyclohexyl oder für Reste von gesättigten bi- oder polycyclischen $C_7$- bis $C_{30}$-Kohlenwasserstoffen, worin das O-Atom an einem C-Atom eines carbocyclischen Ringes oder über eine $C_1$- bis $C_3$-Alkylengruppe an das Ringsystem gebunden ist,

$R^3$ für $C_1$- bis $C_{20}$-Alkyl, $C_3$- bis $C_{20}$-Alkenyl, $C_2$- oder $C_3$-Alkylencarbo-$C_1$- bis $C_{20}$-alkoxy, durch $C_3$- bis $C_{20}$-Alkyl substituiertes Benzyl, durch 1, 2 oder 3 $C_3$- bis $C_{10}$-Alkyl substituiertes Cyclohexyl, einen Rest von gesättigten bi- oder polycyclischen $C_7$- bis $C_{30}$-Kohlenwasserstoffen oder für Reste der Formeln

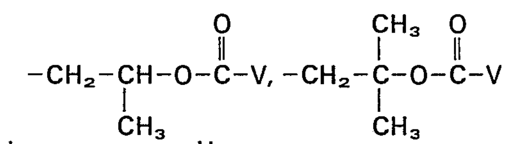

oder

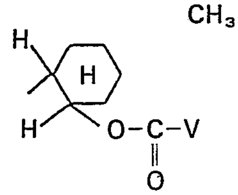

V für $C_8$- bis $C_{19}$-Alkyl, 4-$C_3$- bis $C_{20}$-Alkylphenyl oder für Reste von gesättigten mono-, bi- oder polycyclischen $C_7$- bis $C_{30}$-Kohlenwasserstoffen stehen.

Ausserdem betrifft die vorliegende Erfindung neue Fluoreszenzfarbstoffe der Formeln

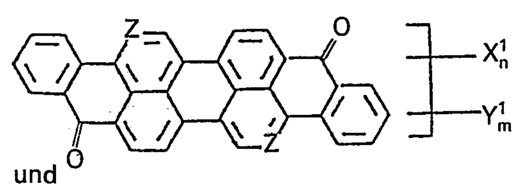
(III)

und

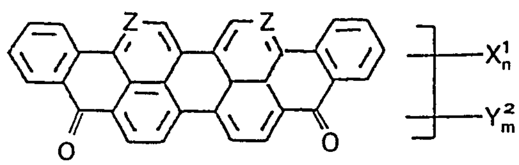
(IV)

in denen

$Z{=}N-$ oder $-\overset{H}{C}=$

$Y^1$ $-OSO_2R^1$, $-O\overset{\overset{O}{\|}}{P}(OR^2)_2$, $-O\overset{\overset{O}{\|}}{C}-R^1$, $-O\overset{\overset{O}{\|}}{C}-OR^{11}$ oder $OR^3$,

mindestens ein $Y^2$ einen Rest der Formel

$-OSO_2R^1$, $-O-\overset{\overset{O}{\|}}{P}(OR^2)_2$, $-O-CO-R^1$, $-O-CO-OR^{11}$ oder $OR^4$ und die restlichen $Y^2$ $-OR^5$,

$X^1$ Fluor, Chlor, $C_1$- bis $C_{20}$-Alkyl, $C_3$- bis $C_{20}$-Alkenyl, Aralkyl, $-COR^1$, $-SO_2R^1$, $-\overset{\overset{O}{\|}}{P}(OR^2)_2$, $-NH-COR^1$ oder $-NH-SO_2R^1$,

m 2, 3 oder 4,

n 0, 1 oder 2,

$R^1$ gegebenenfalls durch Fluor substituiertes $C_1$- bis $C_{20}$-Alkyl, $C_3$- bis $C_{20}$-Alkenyl oder gegebenenfalls durch $C_1$- bis $C_{18}$-Alkyl substituiertes Phenyl,

$R^2$ $C_1$- bis $C_{18}$-Alkyl, durch 1 oder 2 $C_3$- bis $C_{10}$-Alkyl substituiertes Cyclohexyl oder einen gesättigten mono-, bi- oder polycyclischen $C_7$- bis $C_{30}$-Kohlenwasserstoffrest,

$R^3$ $C_4$- bis $C_{20}$-Alkyl, $C_4$- bis $C_{20}$-Alkenyl, $C_2$- oder $C_3$-Alkylencarbo-$C_1$- bis $C_{20}$-alkoxy, durch $C_3$- bis $C_{20}$-Alkyl substituiertes Benzyl, V oder einen Rest der Formeln

$-CH_2-\underset{CH_3}{\underset{|}{C}}H-O\overset{\overset{O}{\|}}{C}-V$, $-CH_2-C(CH_3)_2-O\overset{\overset{O}{\|}}{C}-V$

oder

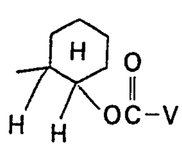

$R^{11}$ $C_4$- bis $C_{20}$-Alkyl, durch 1 oder 2 $C_3$- bis $C_{10}$-Alkyl substituiertes Cyclohexyl oder einen gesättigten mono-, bi- oder polycyclischen $C_7$- bis $C_{30}$-Kohlenwasserstoffrest,

$R_4$ $C_2$- oder $C_3$-Alkylencarbo-$C_1$- bis $C_{20}$-alkoxy, durch $C_3$- bis $C_{20}$-Alkyl substituiertes Benzyl, durch 1 oder 2 $C_3$- bis $C_{10}$-Alkyl substituiertes Cyclohexyl,

$R^5$ $C_4$- bis $C_{20}$-Alkyl, und

V $C_8$- bis $C_{19}$-Alkyl, 4-$C_3$- bis $C_{20}$-Alkylphenyl oder einen gesättigten mono-, bi- oder polycyclischen $C_7$- bis $C_{30}$-Kohlenwasserstoffrest bedeuten,

mit Ausnahme von 6,15-Di-n-butoxy-5,14-diazaisoviolanthrendion-(9, 18) und 6,15-Diisobutoxy-5,14-diazaisoviolanthrendion-(9, 18).

Vorzugsweise steht Z in den Formeln I, II, III oder IV für $=CH-$.

Die Farbstoffe der Formeln I, II, III und VI zeigen Fluoreszenz im Bereich zwischen ca. 580 und 750 nm und zeichnen sich durch eine sehr hohe Fluoreszenzquantenausbeute, besonders hohe Lichtechtheit und durch hohe thermische Stabilität aus.

Die in den Formeln der Substituenten Y und X genannten Reste haben folgende Bedeutung:

1. $R^1$: gegebenenfalls durch Fluor substituiertes $C_1$- bis $C_{20}$-Alkyl, $C_3$- bis $C_{20}$-Alkenyl, Aryl oder ein gegebenenfalls durch Chlor, Fluor, Cyan, $C_1$- bis $C_{20}$-Alkyl, $C_1$- bis $C_{20}$-Alkoxy, $C_1$- bis $C_{20}$-Alkoxycarbonyl oder Phenyl substituierter aromatischer oder heteroaromatischer Rest; wenn $Y-O-COR^1$ ist, kann $R^1$ auch $-OR^{11}$ sein, worin $R^{11}$ $C_1$- bis $C_{18}$-Alkyl, durch 1, 2 oder 3 $C_3$- bis $C_{10}$-Alkyl substituiertes Cyclohexyl oder einen Rest eines gesättigten mono-, bi- oder polycyclischen $C_7$- bis $C_{30}$-Kohlenwasserstoffs bedeuten; oder wenn X $-COR^1$ ist, $R^1$ auch $C_1$- bis $C_{18}$-Alkoxy sein kann.

1.1 Alkyl und Alkenyl: Methyl, Ethyl, Propyl, Butyl, Hexyl, Octyl, 2-Ethylhexyl, Decyl, Dodecyl, Tetradecyl, Hexadecyl, Octadecyl, $-C_6F_{13}$; $C_8H_{17}$, $CF_3$, Oleyl, Adamantyl, Tricyclo-[5.2.1.$0^{2,6}$]-decyl.

1.2 Aryl, substituiertes Aryl oder Heteroaryl, Phenyl, durch $C_1$- bis $C_{20}$-Alkyl, Chlor, Fluor oder Carbo-$C_1$- bis $C_{20}$-alkoxy substituiertes Phenyl oder Naphthyl wie 2- und 4-Tolyl, Butylphenyl, Hexylphenyl, Octylphenyl, Diisopropylnaphthyl, Dibutylnaphthyl, Dodecylphenyl, Diphenyl, Trimethylphenyl, Thienyl, Methylthienyl.

1.3 Alkoxy, Methoxy, Ethoxy, Propoxy, Butoxyl, Hexoxy, Octoxy, 2-Ethylhexoxy, Decoxy, Dodecoxy, Tetradecoxy, Hexadecoxy und Octadecoxy.

1.4 Durch Alkyl substituiertes Cyclohexyl $R^1$, $R^2$ und $R^3$; 4-Isopropylcyclohexyl, tert.-Butylcyclohexyl, i-$C_5$- und i-$C_6$-Alkylcyclohexyl.

2. $R^2$: $C_1$- bis $C_{18}$-Alkyl, z.B. Methyl, Ethyl, Propyl, Butyl, Hexyl, Octyl, Decyl, Dodecyl, Tetradecyl, Hexadecyl und Octadecyl.

3. $R^3$: $C_1$- bis $C_{20}$-Alkyl, $C_3$- bis $C_{20}$-Alkenyl, $C_2$- oder $C_3$-Alkylencarbonyl-$C_1$- bis $C_{20}$-alkoxy oder durch $C_1$- bis $C_{20}$-Alkyl substituiertes Benzyl.

3.1 Alkyl und Alkenyl: Methyl, Ethyl, Propyl, Butyl, Hexyl, Octyl, Decyl, Dodecyl, Tetradecyl, Hexadecyl, Octadecyl, 2-Ethylhexyl, Cyclohexyl, Oleyl, 2-Hydroxyethyl, 2-Hydroxypropyl.

3.2 $C_2/C_3$-Alkylencarboalkoxy: z.B. $-CH_2-CH_2-CO-OR^6$ und

$$-CH_2-\underset{CH_3}{\underset{|}{C}}H-CO-OR^6$$

worin $R^6$ für $C_1$- bis $C_{20}$-Alkyl steht, z.B. für die unter 3.1 genannten Alkylreste.

3.3 Durch Alkyl substituiertes Benzyl; z.B. 4-Methylbenzyl, 4-Butylbenzyl und 4-Dodecylbenzyl, 4-Nonylbenzyl, 4-Hexadecylbenzyl und 4-Octadecylbenzyl.

Bevorzugt sind für $R^1$ und $R^3$ im Falle der für X genannten Substituenten $C_3$- bis $C_{20}$-Alkyl, wobei $R^1$ auch durch Fluor substituiertes Alkyl sein kann.

Als Substituenten Y sind im einzelnen z.B. zu nennen:

4. $-OSO_2R^1$ und $-OCOR^1$, $-O-CO-OR^{11}$:

4.1 $-OSO_2-CH_3$; $-OSO_2CF_3$; $-OSO_2-C_2H_5$; $-OSO_2C_4H_9$; $-OSO_2C_6H_{13}$; $-OSO_2C_6F_{13}$; $-OSO_2C_8H_{17}$; $-OSO_2-C_8F_{17}$; $-OSO_2-C_{10}H_{21}$; $-OSO_2-C_{12}H_{25}$; $-OSO_2-C_7H_{15}$; $-OSO_2-C_7F_{15}$;

4.2 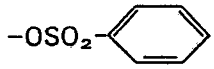; 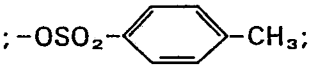; 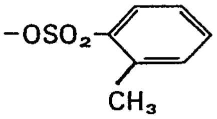; 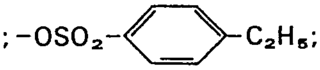;

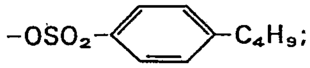; 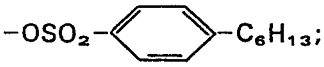; 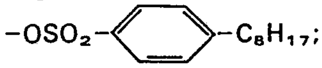;

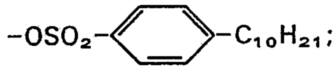; 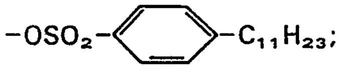; 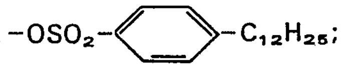;

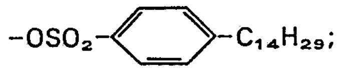; 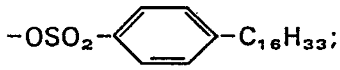; 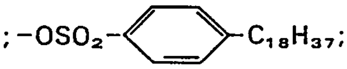;

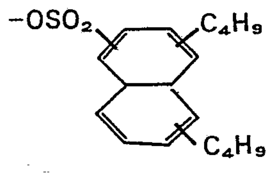

4.3 $-OCOC_2H_5$; $-OCOC_3H_7$; $-OCOC_4H_9$; $-OCOC_6H_{17}$; $-OCOC_7H_{15}$; $-OCOC_8H_{17}$; $-OCO-C_{17}H_{35}$; $-OCOC_{11}H_{23}$; $-OCOC_{15}H_{31}$; $-OCOCF_3$; $-OCO-C_6F_{13}$; $-OCO-C_7F_{15}$; $-OCOC_{17}H_{33}$ (Oleyl); $-OCOC_{10}H_{15}-$ (= $-O-CO-$Adamantyl) und $-OCO-$(Tricyclo[5.2.1.0$^{2.6}$]decyl);

4.4 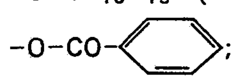; 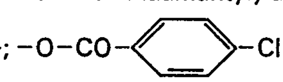; 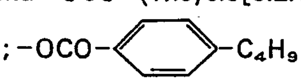; 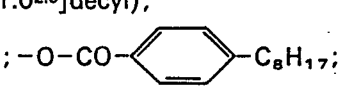;

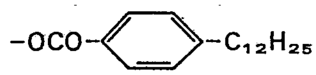 und 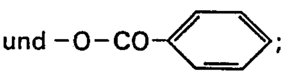;

4.5 $-OCO-OCH_3$; $-OCO-OC_2H_5$; $-OCO-OC_4H_9$; $-OCO-OC_{12}H_{25}$; $-OCO-OC_{16}H_{35}$;

$-OCO-O-CH_2-CH(C_2H_5)-C_4H_9$, $-OCO-O-CH_2-C(CH_3)_3$; 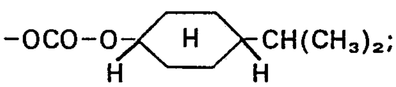;

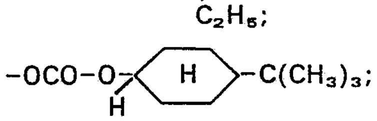; 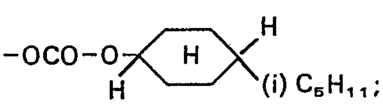; 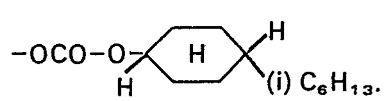.

5. $-OPO(OR^2)_2$: $-OPO(OCH_3)_2$; $-OPO(OC_2H_5)_2$, $-OPO(OC_4H_9)_2$; $-OPO(OC_6H_{13})_2$; $-OPO(OC_8H_{17})_2$, $OPO(OC_{10}H_{21})_2$, $OPO(OC_{16}H_{33})_2$,

$$-OPO(OCH_2-\underset{\displaystyle C_2H_5}{\underset{|}{C}}H-C_4H_9)_2.$$

6. $-OR^3$: Methoxy, Ethoxy, i- und n-Propoxy, Butoxy, Hexoxy, Octoxy, 2-Ethylhexoxy, Decoxy, Dodecoxy, Tetradecoxy, Hexadecoxy und Octadecoxy; 2-Methoxyethoxy, 2-Methoxypropoxy, $-O-C_2H_4-COO-C_2H_5$, $-O-C_2H_4-COOC_2H_4-OCH_3$ und $-OC_2H_4-COOC_4H_9$.

7. Für $R^2$, $R^3$, $R^4$, $R^{11}$ und V kommen neben den anderen Resten solche von gesättigten mono-, di- oder polycyclischen $C_7$- bis $C_{30}$-Kohlenwasserstoffen in Betracht. Diese Kohlenwasserstoffreste sind entweder direkt an einem C-Atom des cyclischen Ringsystems oder über eine Alkylen gruppe gebunden. Die Anknüpfung kann z.B. über

$$-O-,\ -O-\overset{\displaystyle O}{\overset{\|}{C}}-,\ -O-\overset{\displaystyle O}{\overset{\|}{C}}-O-$$

und/oder über Gruppen der Formeln

$$-CH_2-\underset{\displaystyle CH_3}{\underset{|}{C}}H-O-,\ -CH_2-C(CH_3)_2-O-$$

oder 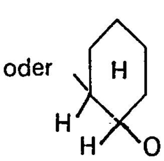 erfolgen.

Als Reste von mono-, bi- oder polycyclischen Kohlenwasserstoffen kommen z.B. solche in Betracht, die sich vom Cyclopentan, von hydriertem Diels-Alder-Addukten des Cyclopentadiens mit Verbindungen mit einer reaktionsfähigen Doppelbindung (philodiene Verbindung) wie Verbindungen, die sich von Bicycloheptan, Bicyclooctan und vom Adamantan ableiten und Derivate, die sich vom Perhydro-1H-cyclopenta-[a]-phenanthren – auch als Steran bezeichnet – ableiten. Diese Grundkörper sind gegebenenfalls durch eine oder mehrere $C_1$- bis $C_{10}$-Alkylgruppen substituiert.

Im einzelnen sind als Reste dieser Kohlenwasserstoffe z.B. zu nennen:

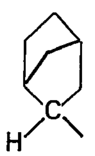
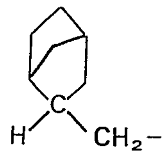
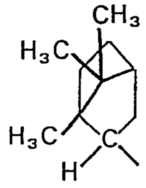
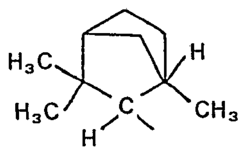
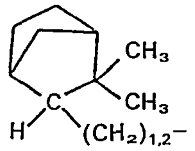
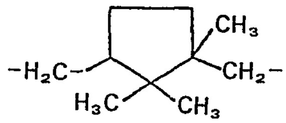
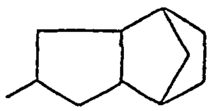
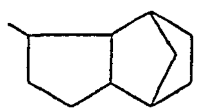
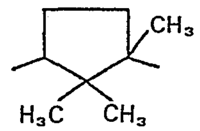
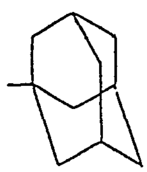
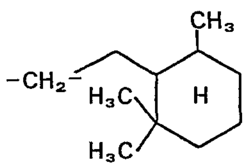
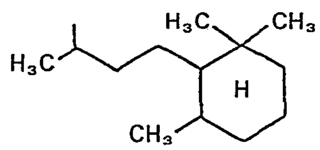
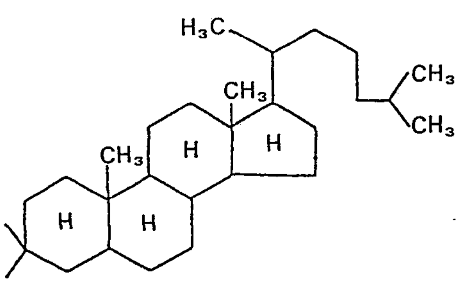

Für Y sind $-OCO-C_3$- bis $C_{18}$-Alkyl, $-OSO_2-C_3$- bis $C_{18}$-Alkyl, wobei die Alkylgruppen gegebenenfalls durch Fluor oder durch $C_1$- bis $C_8$-Alkoxy substituiert sind, $-O-CO-O-R^{11}$, $-OPO(OR^2)_2$, $-OR^3$ bevorzugt.

Besonders bevorzugt sind für Y $-OCO-C_3$- bis $C_{18}$-Alkyl, wobei das Alkyl gegebenenfalls durch $C_1$- bis $C_8$-Alkoxy substituiert ist, $-OCO-OR^{11}$, $-OPO(OR^2)_2$ und $-OR^3$, worin $R^{11}$ die oben angegebene Bedeutung hat und $R^2$ für $C_4$- bis $C_{18}$-Alkyl, ein 4-($C_3$- bis $C_{10}$-Alkyl)cyclohexyl oder einen Rest eines gesättigten mono-, bi- oder polycyclischen $C_7$- bis $C_{30}$-Kohlenwasserstoffs und $R^3$ für $C_3$- bis $C_{18}$-Alkyl, für 4-($C_3$- bis $C_{10}$-Alkyl)cyclohexyl, für einen Rest eines gesättigten mono-, bi- oder polycyclischen $C_7$- bis $C_{30}$-Kohlenwasserstoffs oder für einen Rest der Formeln

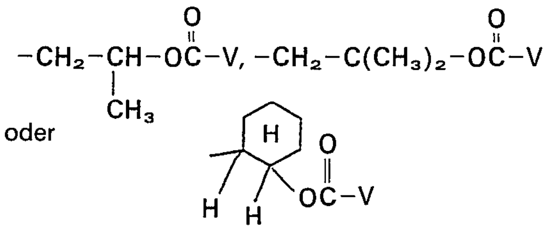
oder

und V für $C_8$- bis $C_{19}$-Alkyl, 4-$C_3$- bis $C_{20}$-Alkylphenyl oder für den Rest eines gesättigten mono-, bi- oder polycyclischen $C_7$- bis $C_{30}$-Kohlenwasserstoffs stehen.

Für X sind ausser den bestimmt genannten Resten z.B. im einzelnen zu nennen:

7.1 $C_1$- bis $C_{20}$-Alkyl und Alkenyl, wobei im einzelnen die gleichen wie für $R^1$ unter 1.1 angegebenen in Betracht kommen.

7.2 Als Aralkyl kommt z.B. durch Cyan, $C_1$- bis $C_8$-Alkoxycarbonyl oder Chlor substituiertes Benzyl in Betracht wie 2-Cyanobenzyl,

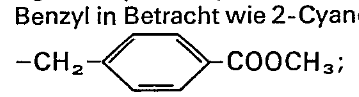

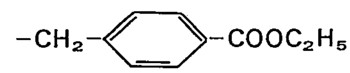 und

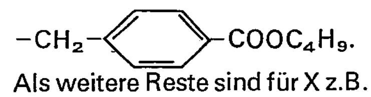

Als weitere Reste sind für X z.B. zu nennen:

7.3 $-COR^1$ und $-SO_2R^1$: $-COCH_3$; $-CO-C_3H_7$; $-CO-O-C_1-$ bis $C_{18}$-Alkyl: $-CO-O-CH_3$; $-CO-OC_4H_9$; $-CO-OC_6H_{13}$; $-CO-OC_8H_{17}$; $-CO-OC_{10}H_{21}$; $-CO-OC_{12}H_{25}$; $-SO_2-CH_3$; $-SO_2C_4H_9$; $-SO_2-C_6H_{13}$; $-SO_2-C_8H_{17}$; $-SO_2C_4F_9$; $-SO_2-C_6F_{13}$; $-SO_2-C_8F_{17}$; 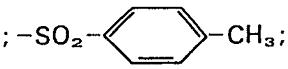

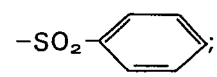

7.4 $-PO(OR^2)_2$: $-PO(OCH_3)_2$;

7.5 $-NH-COR^1$ und $-NH-SO_2R^1$: $-NH-COCH_3$; $-NH-COC_3H_7$;

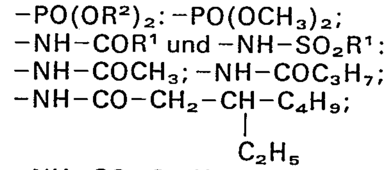

$-NH-CO-C_{17}H_{33}$; $-NH-SO_2-C_4H_9$; $-NH-SO_2-C_6H_{13}$; $-NH-SO_2-C_8H_{17}$;

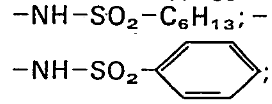

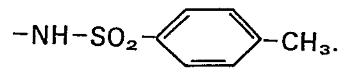

In den Verbindungen der Formel I (=Isoviolanthrendion-[9, 18]) stehen die Substituenten Y im Falle der Disubstitution vorzugsweise in den Positionen 2 und 11, 4 und 13, 5 und 14, insbesondere in den Positionen 6 und 15, und im Falle der Tetrasubstitution in den Positionen 15, 16, 17 und 18.

Bei den Verbindungen der Formel II (=Violanthrendion-[5,10]) stehen die Substituenten Y vorzugsweise in den Positionen 16 und 17, 3 und 12, 1 und 14, 15 und 18, sowie 1, 14, 16 und 17 und insbesondere in den Positionen 16 und 17.

Besonders bevorzugt sind Verbindungen der Formeln

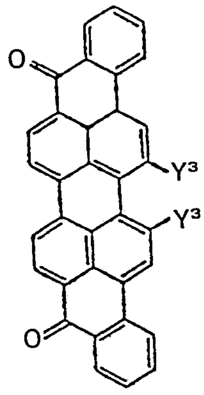

und

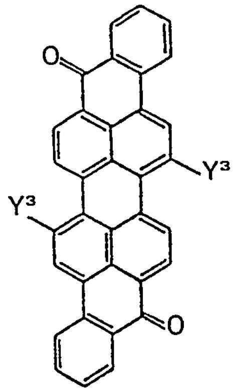

(V) (VI)

in denen

$Y^3$ für $-OSO_2R^1$, $-O\overset{O}{\overset{\|}{P}}(OR^2)_2$, $-O\overset{O}{\overset{\|}{C}}-R^1$, $-O\overset{O}{\overset{\|}{C}}-OR^{11}$ oder $OR^3$,

$R^1$ für gegebenenfalls durch Fluor substituiertes $C_1$- bis $C_{20}$-Alkyl, $C_3$- bis $C_{20}$-Alkenyl oder für gegebenenfalls durch $C_1$- bis $C_{18}$-Alkyl substituiertes Phenyl,

$R^2$ für $C_1$- bis $C_{18}$-Alkyl, durch 1 oder 2 $C_3$- bis $C_{10}$-Alkyl substituiertes Cyclohexyl oder für einen gesättigten mono-, bi- oder polycyclischen $C_7$- bis $C_{30}$-Kohlenwasserstoffrest,

$R^3$ für $C_4$- bis $C_{20}$-Alkyl, $C_4$- bis $C_{20}$-Alkenyl, durch 1 oder 2 $C_3$- bis $C_{10}$-Alkyl substituiertes Cyclohexyl, oder für einen gesättigten mono-, bi- oder polycyclischen $C_7$- bis $C_{30}$-Kohlenwasserstoffrest oder für einen Rest der Formeln

$$-CH_2-\underset{CH_3}{\underset{|}{CH}}-O-\overset{O}{\overset{\|}{C}}-V,\ -CH_2-C(CH_3)_2-O\overset{O}{\overset{\|}{C}}-V$$

oder

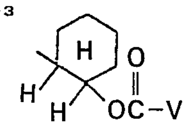

$R^{11}$ für $C_4$- bis $C_{20}$-Alkyl, durch 1 oder 2 $C_3$- bis $C_{10}$-Alkyl substituiertes Cyclohexyl oder einen gesättigten mono-, bi- oder polycyclischen $C_7$- bis $C_{30}$-Kohlenwasserstoffrest, und

V für $C_8$- bis $C_{19}$-Alkyl, 4-$C_3$- bis $C_{20}$-Alkylphenyl oder einen gesättigten mono-, bi- oder polycyclischen $C_7$- bis $C_{30}$-Kohlenwasserstoffrest stehen.

Ganz besonders sind Farbstoffe der Formeln V und VI bevorzugt, bei denen $Y^3$ grosse voluminöse Substituenten sind. Als solche voluminösen Substituenten sind z.B. zu nennen:

$$Y^3 = -OR^6,\ -O-\overset{O}{\overset{\|}{C}}-OR^{12} \text{ und/oder } -O\overset{O}{\overset{\|}{P}}(OR^7)_2,$$

wobei

$R^6$ für 4-($C_3$- bis $C_{10}$-Alkyl)cyclohexyl, für einen Rest eines gesättigten mono-, bi- oder polycyclischen $C_7$- bis $C_{30}$-Kohlenwasserstoffs oder für Reste der Formeln

$$-CH_2-\underset{CH_3}{\underset{|}{CH}}-O-\overset{O}{\overset{\|}{C}}-V,\ -CH_2-C(CH_3)_2-O-C-V$$

oder

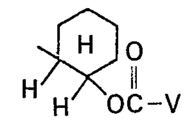

V Für $C_8$- bis $C_{19}$-Alkyl, 4-($C_3$- bis $C_{20}$-Alkyl)phenyl oder einen gesättigten mono-, bi- oder polycyclischen $C_7$- bis $C_{30}$-Kohlenwasserstoffrest,

$R^7$ für $C_8$- bis $C_{18}$-Alkyl, 4-($C_3$- bis $C_{20}$-Alkyl)phenyl oder einen gesättigten mono-, bi- oder polycyclischen $C_7$- bis $C_{30}$-Kohlenwasserstoffrest, und

$R^{12}$ für $C_8$- bis $C_{20}$-Alkyl, 4-($C_3$- bis $C_{10}$-Alkyl)cyclohexyl oder einen gesättigten mono-, di- oder polycyclischen $C_7$- bis $C_{30}$-Kohlenwasserstoffrest stehen.

Die letztgenannten Farbstoffe weisen im Vergleich zu den anderen Isoviolanthron- und Violanthronfarbstoffen eine verbesserte Lichtechtheit auf.

Die Verbindungen der Formeln I und II sind teilweise bekannt. Neu sind die Verbindungen gemäss den Formeln III, IV, V und VI.

Die Verbindungen der Formeln I bis VI werden durch Umsetzen der entsprechenden Dihydroxy- oder Tetrahydroxyviolanthrendione bzw. -isoviolanthrendione mit den entsprechenden Acylierungsmitteln oder Alkylierungsmitteln erhalten.

Die Acylierung erfolgt z.B. mit den entsprechenden Säurehalogeniden, z.B. mit dem Carbonsäurechlorid, Phosphorsäurechlorid oder dem entsprechenden Sulfonsäurechlorid in Pyridin oder im Nitrobenzol in Gegenwart von Soda oder Kaliumcarbonat.

Die Ether werden durch Umsetzen mit den entsprechenden Alkylierungsmitteln in Dimethylformamid oder Nitrobenzol hergestellt. Einzelheiten der Herstellung sind den Beispielen zu entnehmen.

Die Reinigung der Umsetzungsprodukte der Formeln I bis VI erfolgt nach an sich bekannten Verfahren, z.B. durch Umkristallisieren aus organischen Lösungsmitteln, durch Gegenstromverteilung nach Craig, durch chromatographische Verfahren, wie Säulenchromatographie, Hochdruckflüssigkeitschromatographie oder präparative Schichtchromatographie. Gegebenenfalls wird das Reinigungsverfahren ein- oder mehrfach wiederholt oder es werden verschiedene Reinigungsverfahren kombiniert, um sehr reine Verbindungen zu erhalten.

Zur Anwendung werden die Verbindungen I bis VI in für die Anwendung geeigneten Kunststoffen eingearbeitet. Hierzu wird der Kunststoff als Granulat mit der benötigten Menge an Farbstoff bepudert und die Granulate dann zu Flächengebilden extrudiert. Als Kunststoffe (Medium) kommen z.B. für eine Verwendung zur Lichtkonzentration für Solarzellen vorzugsweise Polymethylmethacrylat, Polymethylacrylat, Polystyrol, Polydiethylenglykoldiallylbiscarbonat, ferner auch geeignete Polyamide und Polycarbonate sowie Polyvinylchlorid in Betracht.

Wegen der guten Löslichkeit der Verbindungen I bis VI in organischen Lösungsmitteln können die Verbindungen auch dann angewendet werden, wenn die Kunststoffplatten im Giessverfahren hergestellt werden. Ausserdem können die Lichtsammelsysteme die Verbindungen I bis VI auch in Form einer Lösung z.B. in Alkoholen, Ketonen, Halogenkohlenwasserstoffen oder Ether enthalten.

Die neuen Lichtsammelsysteme können z.B. in Verbindung mit Solarzellen zur Nutzbarmachung der Sonnenenergie und in Szintillatoren bekannter Art (s. z.B. J. B. Birks „The Theory and Practice of Scintillation Counting" [Pergamon Press, London 1964]; „J. Opt. Am.", *39,* 912 [1949]; „J. Appl. Phys.", *40,* 3544 [1969]; „Nuclear Instruments a. Methods", *87,* 111 bis 123 [1970]; „Research Disclosure", S. 43 [1977]; DE-OS Nr. 2629641) Verwendung finden. Darüber hinaus eignen sie sich in Verbindung mit elektronischen Steuerungen als Anzeigevorrichtungen mit sehr geringem Energieverbrauch. Weiterhin eignen sie sich ohne elektronische Bauteile für vielerlei Anzeige-, Hinweis- und Markierungszwecke, z.B. in passiven Anzeigeelementen, Hinweis- und Verkehrszeichen wie Ampeln und in Zeichengeräten.

Die Erfindung soll durch die folgenden Beispiele weiter erläutert werden. Die im folgenden angegebenen Teile und Prozentangaben beziehen sich auf das Gewicht. Die Absorptionsmaxima wurden an Lösungen der Farbstoffe in Chloroform bestimmt.

*Beispiel 1*

11,6 Teile 16,17-Dihydroxyviolanthrendion-(5,10) werden in 200 Teilen Pyridin gelöst und nach dem Zugeben von 10 Teilen 2-Ethylhexansäurechlorid 2 h bei 25 bis 40° C gerührt. Das ausgefallene Produkt wird abgesaugt und mit Methanol gewaschen. Ausbeute 14 Teile der unten angegebenen Verbindung. Zur Reinigung wird aus Schwerbenzin (Kp. 130 bis 150° C) 3mal umkristallisiert.

Man erhält tiefrote Kristalle mit einem Smp. 262 bis 263° C.

$\lambda_{max.}$: 575 nm (Chloroform)
Emissionsmax.: 619 nm
Fluoreszenzausbeute: 90%

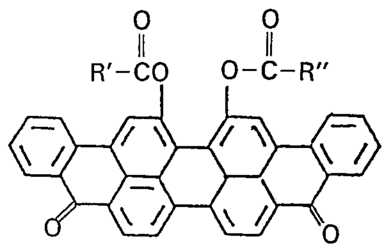

R' = R'' = $-CH-C_4H_9$
$C_2H_5$

*Beispiele 2 bis 13*

Analog den Angaben des Beispiels 1 werden aus 16,17-Dihydroxyviolanthrendion-(5,10) Ester der unten angegebenen Formel hergestellt. Die Bedeutung von Z und Z' ist in der folgenden Tabelle angegeben

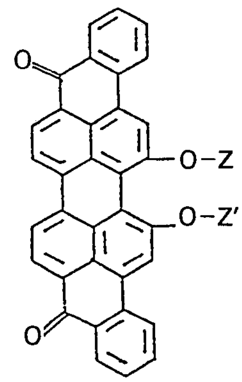

(V)

| Beispiel | Z = Z' | $\lambda_{max.}$ (nm) | Smp. (°C) |
|---|---|---|---|
| 2 | $-COC_8H_{17}$ | 575 | 234 |
| 3 | $-COC_{17}H_{33}$ (Oleyl) | 576 | 191 |
| 4 | $-CO-OC_2H_5$ | 580 | >300 |
| 5 | $-COC(CH_3)_3$ | 576 | >300 |
| 6 | 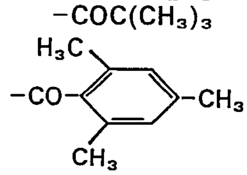 | 575 | >300 |
| 7 | 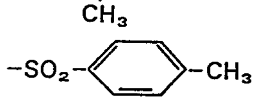 | 581 | >300 |
| 8 | 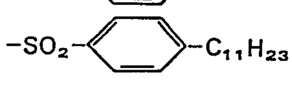 | 580 | 180 |
| 9 | $-SO_2C_6F_{13}$ | 590 | |
| 10 | $-COC_7F_{15}$ | 589 | |
| 11 | $-PO(OC_2H_5)_2$ | 584 | |
| 12 | $-PO(OC_4H_9)_2$ | 583 | |

*Beispiel 13*

11,6 Teile 16,17-Dihydroxyviolanthrendion-(5,10) werden in 200 Teilen Pyridin gelöst und zuerst mit 2 Teilen p-Toluolsulfochlorid bei 50° C (Reaktionsdauer 1 h) und anschliessend mit 2 Teilen Trimethylbenzoylchlorid bei 60° C umgesetzt. Nach 1 h bei 60° C wird der Farbstoff durch Zugeben von Methanol gefällt und durch Säulenchromatographie (Silicagel/$HCCl_3$) gereinigt. Man erhält 5 Teile des Farbstoffs der Formel V

mit Z = 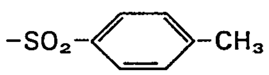 und Z'

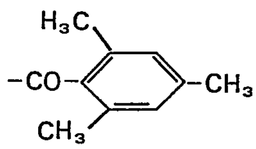

*Beispiel 14*

11,6 Teile 16,17-Dihydroxyviolanthrendion-(5,10) werden in 200 Teilen Dimethylformamid mit 15 Teilen 1-Octylbromid und 17 Teilen Kaliumcarbonat (wasserfrei) 5 h auf 100° C erwärmt. Das Reaktionsprodukt der Formel V mit $Z=Z'=C_8H_{17}$ (n) wird abgesaugt, mit Methanol gewaschen und aus Ethylenglykolmonomethylether 2mal umkristallisiert.

Ausbeute: 11 Teile; Smp.: 198 bis 201° C

$\lambda_{max.}$: 621 nm

Emissionsmax.: 710 nm

Fluoreszenzquantenausbeute in $DCCl_3$: 60%

*Beispiel 15*

Es wird wie in Beispiel 14 verfahren, jedoch werden anstelle von 1-Octylbromid 14 Teile 1-Butylbromid angewendet. Man erhält 16,17-Di-n-butoxyviolanthrendion-(5,10) vom Smp. 275 bis 280° C.

*Beispiele 16 bis 18*

12 Teile 17-Hydroxy-16-isopropoxyviolanthrendion-(5,10) werden in 190 Teilen Pyridin gelöst und das Gemisch nach dem Zugeben von 5 Teilen 2-Ethylhexansäurechlorid 2 h auf 50° C erwärmt. Das Umsetzungsprodukt wird wie in Beispiel 1 angegeben isoliert und gereinigt.

Ausbeute: 10 Teile der Verbindung der Formel V. Die Bedeutung von Z und Z' ist in der unten stehenden Tabelle angegeben.

Analog erhält man die in der folgenden Tabelle angegebenen Verbindungen der Formel V:

| Beispiel | Z | Z' |
|---|---|---|
| 16 | $-CH(CH_3)_2$ | $-CO-\underset{C_2H_5}{\underset{\vert}{CH}}-C_4H_9$ |
| 17 | $-CH(CH_3)_2$ | 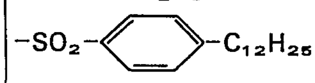 |
| 18 | $-C_4H_9$ (n) | $-CO-C_8H_{17}$ |

*Beispiele 19 bis 26*

Es wird wie in Beispiel 1 gearbeitet, verwendet jedoch die gleiche Menge 6,15-Dihydroxyisoviolanthrendion-(9,18). Man erhält die Verbindung der unten angegebenen Formel VI, in der Z und Z' für 2-Ethylhexanoyl stehen.

Smp.: 269 bis 270° C

$\lambda_{max.}$: 571 nm

Emissionsmax.: 600 nm

Fluoreszenzquantenausbeute in $CHCl_3$: 100%

Analog erhält man die in der folgenden Tabelle angegebenen Verbindungen:

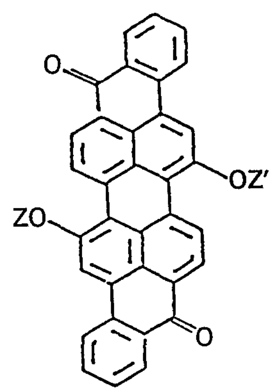

(VI)

| Beispiel | Z = Z' | $\lambda_{max.}$ (nm) | Smp. (°C) |
|---|---|---|---|
| 19 | $-CO-\underset{C_2H_5}{\underset{\vert}{CH}}-C_4H_9$ | 574 | 269-270 |
| 20 | $-CO-C_{17}H_{33}$ (Oleyl) | 574,5 | 176-194 |
| 21 | $-COC_8H_{17}$ | 573 | 256-259 |
| 22 | 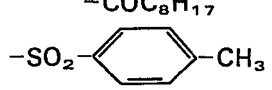 | 578 | >300 |
| 23 | 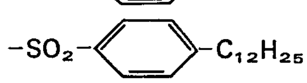 | 577 | 185-192 |
| 24 | $-SO_2-C_6F_{13}$ | 589 | |
| 25 | $-CO-C_7F_{15}$ | 588 | |
| 26 | $-PO(OC_2H_5)_2$ | 579 | >300 |

*Beispiele 27 bis 32*

Ausgehend von 6,15-Dihydroxyisoviolanthrendion-(9,18) erhält man analog Beispiel 14 bzw. analog Beispiel 16 Verbindungen der Formel VI, in der Z und Z′ die in der folgenden Tabelle angegebene Bedeutung haben.

| Beispiel | Z | Z′ | $\lambda_{max.}$ (nm) | |
|---|---|---|---|---|
| 27 | $-C_8H_{17}$ | $-C_8H_{17}$ | 622 | Emissionsmax.: 660 nm<br>Fluoreszenzquantanausbeute: 85%<br>Smp.: 300°C |
| 28 | $-C_4H_9$ | $-C_4H_9$ | 622 | |
| 29 | $-CH(CH_3)_2$ | $-CO-CH-C_4H_9$<br>$C_2H_5$ | 594 | violett |
| 30 | $-CH(CH_3)_2$ | $-CO-C_8H_{17}$ | 594 | violett |
| 31 | $-CH(CH_3)_2$ | $-SO_2-$ 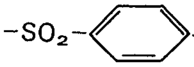 $-CH_3$ | 595 | blauviolett |
| 32 | $-CH(CH_3)_2$ | $-SO_2-$ 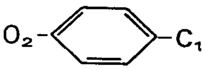 $-C_{11}H_{23}$ | 596 | blauviolett |

*Beispiele 33 bis 36*

Analog den Angaben des Beispiels 1 bzw. des Beispiels 14 wurden folgende Verbindungen hergestellt:

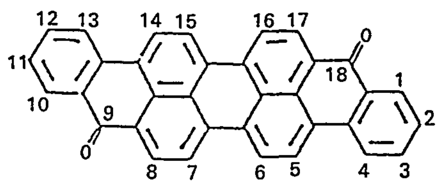

| Beispiel | Ausgangsstoff | Verbindung | Farbe |
|---|---|---|---|
| 33 | 2,11-Dihydroxyisoviolanthrendion-(9,18) | $2,11-(-OCO-CH-C_4H_9)_2$<br>$C_2H_5$ | blaustichig rot |
| 34 | 2,11-Dihydroxyisoviolanthrendion-(9,18) | $2,11-(-OC_8H_{17})_2$ | türkis |
| 35 | 2,11-Dihydroxyisoviolanthrendion-(9,18) | $2,11-(-OSO_2-$ 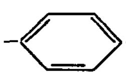 $-CH_3)_2$ | rot |
| 36 | 4,13-Dihydroxyisoviolanthrendion-(9,18) | $4,13-(-OC_8H_{17})_2$ | scharlach |

*Beispiel 37*

Entsprechend den Angaben des Beispiels 14 erhält man aus 1-, 14-, 16-, 17-Tetrahydroxyviolanthrendion-(5,10) die entsprechende 1-, 14-, 16-, 17-Tetraoctoxyverbindung. ($Z = -C_8H_{17}$), die türkisfarbene Lösungen ergibt.

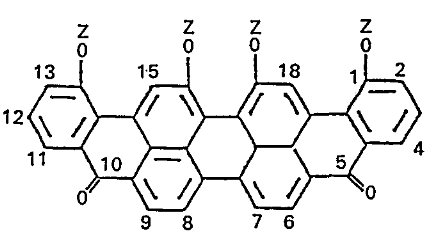

(VII)

*Beispiel 38*

Analog Beispiel 1 erhält man aus 1-, 14-, 16-, 17-Tetrahydroxyviolanthrendion-(5,10) das entsprechende 1-, 14-, 16-, 17-Tetra-(2′-ethylhexanoyloxy)violanthrendion-(5,10) (Formel VII mit $Z = -CO-CH-C_4H_9$).
$C_2H_5$

Lösungsfarbe: rot

*Anwendungsbeispiel 1*

In geschmolzenem Polymethylmethacrylat werden 0,01% des Farbstoffs aus Beispiel 1 gelöst, homogen verteilt und zu Fluoreszenzplatten verarbeitet.

*Anwendungsbeispiel 2*

1000 Teile Polymethylmethacrylat (Granulat) werden mit 0,05 Teilen des Farbstoffs aus Beispiel 2 gleichmässig bepudert. Das Gemisch wird anschliessend zu Platten extrudiert.

*Anwendungsbeispiele 3 bis 25*

Entsprechend den Anwendungsbeispielen 1 oder 2 werden Fluoreszenzplatten oder -folien hergestellt:

| Beispiel | Farbstoff aus Beispiel | Material |
|---|---|---|
| 3 | 6 | Polymethylmethacrylat |
| 4 | 7 | Polymethylmethacrylat |
| 5 | 9 | Polymethylmethacrylat |
| 6 | 10 | Polymethylmethacrylat |
| 7 | 11 | Polymethylmethacrylat |
| 8 | 14 | Polymethylmethacrylat |
| 9 | 16 | Polymethylmethacrylat |
| 10 | 19 | Polymethylmethacrylat |
| 11 | 19 | Polyvinylchlorid |
| 12 | 19 | Polystyrol |
| 13 | 19 | Polycarbonat |
| 14 | 19 | Polyethylen |
| 15 | 25 | Polyethylen |
| 16 | 1 | Polyethylen |
| 17 | 21 | Polyethylen |
| 18 | 21 | Polymethylmethacrylat |
| 19 | 23 | Polymethylmethacrylat |
| 20 | 24 | Polymethylmethacrylat |
| 21 | 27 | Polymethylmethacrylat |
| 22 | 32 | Polymethylmethacrylat |
| 23 | 16,17-Dimethoxyviolanthrendion-(5,10) | Polymethylmethacrylat |
| 24 | 3,12-Dichlor-16,17-dimethoxyviolanthrendion-(5,10) | Polymethylmethacrylat |
| 25 | 16,17,18-Tristearoyloxyviolanthrendion-(5,10) | Polymethylmethacrylat |
| 26 | Dichlor-6,15-dimethoxyisoviolanthrendion-(9,18) | Polymethylmethacrylat |

*Beispiel 39*

a) 65,2 Teile Bromazabenzanthron der Formel VIII werden in einer Suspension von 13,8 Teilen Kaliumcarbonat in 500 Teilen N-Methylpyrrolidin mit 58 Teilen n-Octylbromid versetzt. Es wird 2 h bei 100° C gerührt. Nach dem Abkühlen wird der Reaktionsansatz auf Eiswasser gegossen und mit Eisessig neutralisiert. Das angefallene Produkt wurde abgesaugt, mit viel Wasser gewaschen und getrocknet. Ausbeute: 76 Teile der Benzanthronverbindung der Formel IX; Smp. 100 bis 105° C.

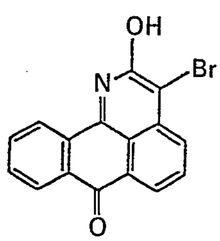

(VIII)

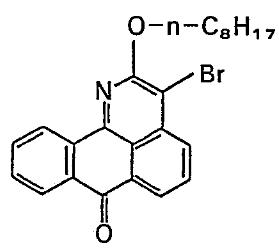

(IX)

b) 65,2 Teile Alkoxybrombenzanthron aus a wurden in 600 Teilen Dimethylformamid mit 17,4 Teilen Dikaliumsulfid (44%ig) versetzt. Anschliessend wurde unter $N_2$ 2 h bei 100° C gerührt. Beim Abkühlen fällt das Reaktionsprodukt aus. Es wird abgesaugt, mit DMF, Methanol und Wasser gewaschen und getrocknet. Man erhielt 34,2 Teile der Verbindung der Formel

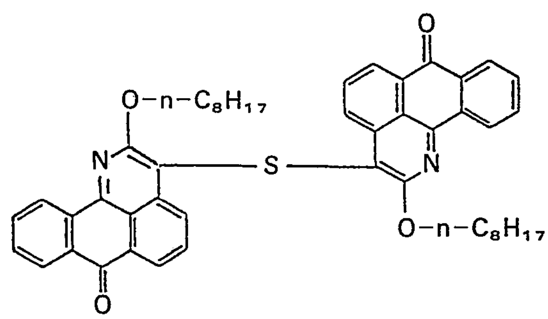

Smp.: 190 bis 195° C.

c) 31,4 Teile Produkt aus b wurden in 600 Teilen Butanol mit 93,8 Teilen KOH 5 h unter Rückfluss erhitzt. Aus dem Reaktionsgemisch wurde anschliessend das Butanol mit Wasserdampf abdestilliert, das Verfahrensprodukt heiss abgesaugt und neutral gewaschen. Das Filtergut wurde in 150 Teilen n-Hexan aufgekocht und abgesaugt. Anschliessend wurde das Filtergut in 150 Teilen DMF erwärmt (100° C) und heiss abgesaugt. Nach dem Waschen mit Methanol und Wasser erhielt man 15,3 Teile eines leuchtend blauen Fluoreszenzfarbstoffs der Formel

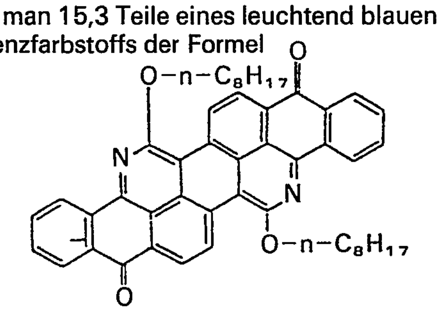

Smp.: 295 bis 300° C
$\lambda_{max.}$: ($CHCl_3$): 660 nm
Emissionsmax.: 696 nm

*Beispiel 40*

a) 14,4 Teile 6,15-Dihydroxyisoviolanthrendion-(9,18), 22,5 Teile Cyclohexenoxid und 1,5 Teile Piperidin wurden in 250 Teilen N-Methylpyrrolidin 8 h bei 170° C gerührt. Die Suspension wurde abgesaugt und das Filtergut mit Methanol und Wasser gewaschen. Ausbeute: 11,7 Teile der Verbindung der Formel XII

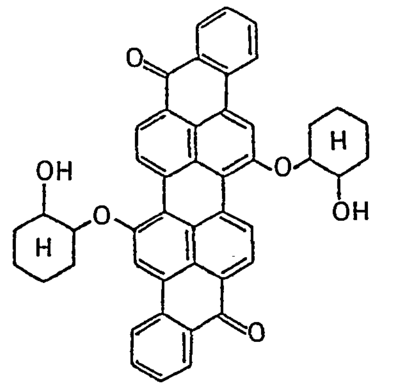
(XII)

Fp.: 300° C
$\lambda_{max.}$: 614 nm

b) Verwendete man anstelle von Cyclohexenoxid die äquivalente Menge Propylenoxid oder Isobutylenoxid, so erhielt man analog die entsprechenden Hydroxyalkoxyverbindungen.

c) Verwendete man anstelle von 6,15-Dihydroxyisoviolanthrendion-(4,18) die äquivalente Menge 16,17-Dihydroxyviolanthrendion-(5,10), dann erhielt man bei gleicher Arbeitsweise die entsprechenden Violanthrendionderivate.

*Beispiel 41*

Zu einer Lösung von 3,4 Teilen der Verbindung des Beispiels 40a in 80 Teilen Pyridin wurden 7,5 Teile Tricyclodecansäurechlorid (Gemisch aus 2- und 3-Carbonsäurechlorid) zugetropft. Anschliessend wurde 7 h bei 50° C gerührt. Das Reaktionsgemisch wurde filtriert und im Filtrat das Reaktionsprodukt durch Zugeben von Methanol ausgefällt und abfiltriert. Das Rohprodukt wurde durch Chromatographie auf der Säule an basischem $Al_2O_3$ mit $CHCl_3$ als Elutionsmittel gereinigt. Ausbeute: 4 Teile rot fluoreszierender Farbstoff der Formel

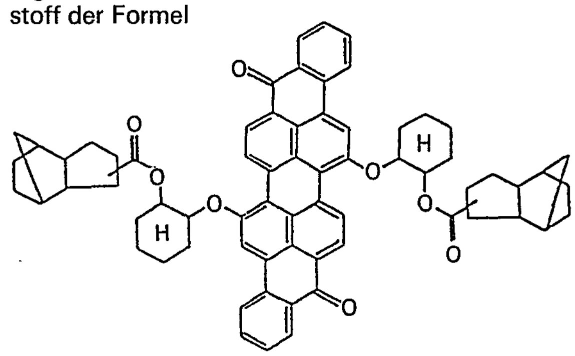

Smp.: 218° C
$\lambda_{max.}$ ($CHCl_3$): 618 nm
Emissionsmax.: 675 nm

*Beispiele 42 bis 49*

Analog Beispiel 41 erhielt man die in folgender Tabelle angegebenen Fluoreszenzfarbstoffe der Formel X.

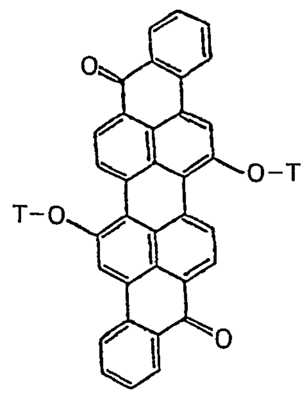
(X)

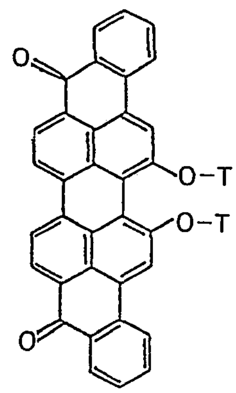
(Xa)

| Beispiel | Formel X (T) | Smp. (° C) | $\lambda_{max.}$ (nm) |
|---|---|---|---|
| 42 | 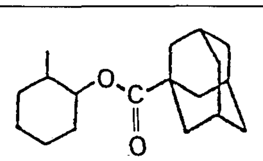 | 253 | 618 |
| 43 | 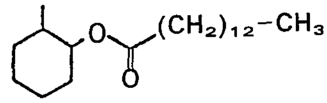 | 118-120 | 616 |
| 44 | 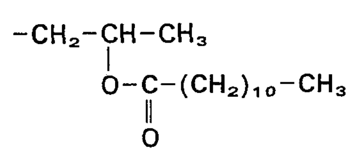 | paraffinartiges Wachs | 618 |

| Beispiel | Formel X (T) | Smp. (°C) | $\lambda_{max.}$ (nm) |
|---|---|---|---|
| 45 | 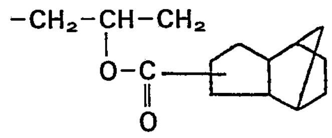 | 260-262 | 617 |
| 46 | 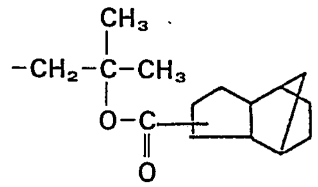 | | 618 |
| 47 | 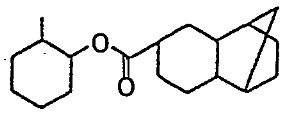 | >300 | 638 |
| 48 | 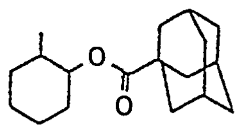 | >300 | 632 |
| 49 | 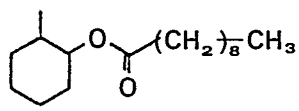 | 174-177 | 612 |

*Beispiel 50*

In eine Lösung von 108 Teilen 4-tert.-Butylcyclohexylchlorformiat und 4 Teilen Pyridin in 600 Teilen Essigester werden langsam 2,44 Teile 6,15-Dihydroxyisoviolanthrendion-(9,18) eingetragen. Dabei erwärmte sich der Ansatz auf 50° C. Anschliessend wurde noch 1 h bei Raumtemperatur gerührt. Das Reaktionsgemisch wurde über Kieselgel filtriert und das Filtrat eingeengt. Ausbeute: 1,2 Teile roter Fluoreszenzfarbstoff der Formel

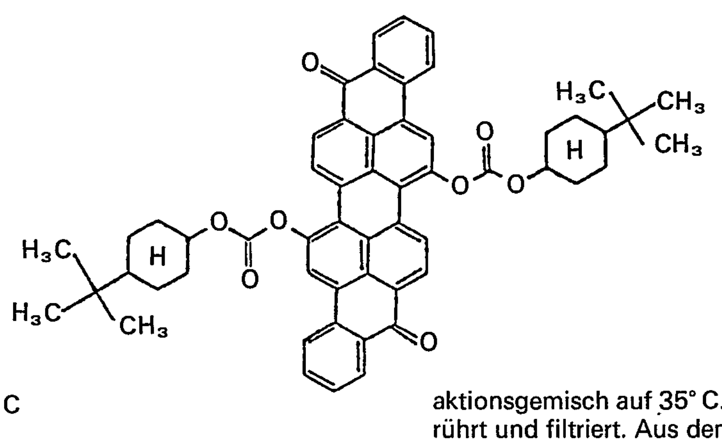

Smp.: 162 bis 168° C
$\lambda_{max.}$: 572 nm
Emissionsmax.: 603 nm

*Beispiel 51*

Zu einer Suspension von 2,44 Teilen 6,15-Dihydroxyisoviolanthrendion-(9,18) in 100 Teilen N-Methylpyrrolidin (NMP) wurden 20 Teile 4-tert.-Butylcyclohexylchlorformiat zugefügt. Bei 30° C wurde eine Lösung von 1,1 Teilen 1,4-Diazabicyclo-(2,2,2)-octan (Triethylendiamin) in 10 Teilen NMP zugetropft. Dabei erwärmt sich das Reaktionsgemisch auf 35° C. Es wurde kurz nachgerührt und filtriert. Aus dem Filtrat wurde das Produkt mit Methanol/Wasser gefällt und abgesaugt. Das Filtergut wurde in Essigester gelöst, die Lösung zur Reinigung über Kieselgel filtriert und die Lösung eingeengt. Der isolierte rote Fluoreszenzfarbstoff ist identisch mit der nach Beispiel 50 erhaltenen Verbindung.

*Beispiele 52 bis 57*

Analog Beispiel 51 wurden die in der folgenden Tabelle angegebenen roten Fluoreszenzfarbstoffe der Formel X und Xa erhalten.

| Beispiel | Formel X (T) | $\lambda_{max.}$ (nm) |
|---|---|---|
| 52 | 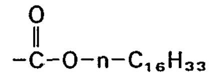 | 574 |
| 53 | 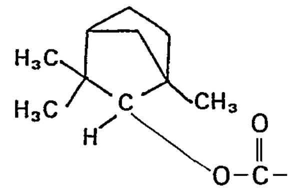 | 573 |
| 54 | 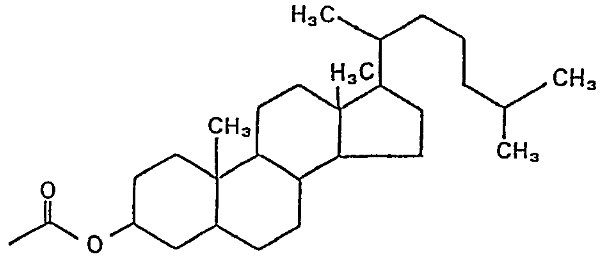 | 574 |
| 55 | 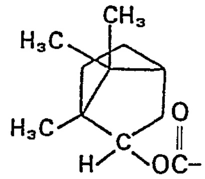 | 572 |
| | Formel Xa | |
| 56 | 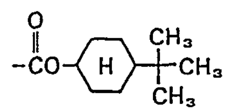 | 579 |
| 57 | 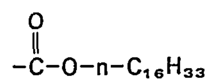 | 577 |

*Beispiel 58*

In eine Suspension von 5 Teilen 16,17-Dihydroxyviolanthrendion-(5,10) in 150 Teilen Xylol wurden Chlorphosphonsäuredi-n-octylester eingetragen und dann 7 Teile Triethylamin zugegeben und anschliessend 4 h bei 50° C gerührt. Nach dem Abkühlen auf Raumtemperatur wurde filtriert und das Filtrat eingedampft. Das Rohprodukt wurde durch Säulenchromatographie an basischem $Al_2O_3$ mit Essigester als Elutionsmittel gereinigt. Ausbeute: 1,7 Teile roter Fluoreszenzfarbstoff der Formel

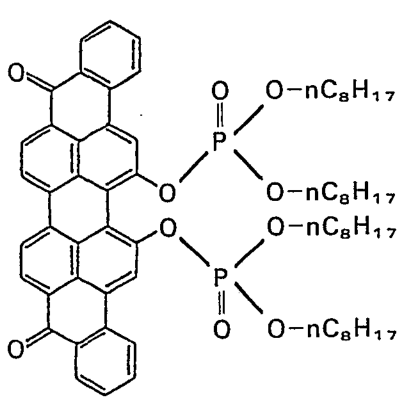

Smp.: 100 bis 101° C
$\lambda_{max.}$: 584 nm
Emissionsmax.: 640 nm

*Beispiele 59 bis 66*

Analog Beispiel 58 wurden die in der folgenden Tabelle angegebenen roten Fluoreszenzfarbstoffe der Formel X und Xa hergestellt.

*Beispiel 67*

5,2 Teile (15,18)-Diamino-16,17-dihydroxyviolanthrendion-(5,10) in 150 Teilen wasserfreiem Trichlorbenzol und 3 Teilen N,N-Diethylanilin wurden mit 5,1 Teilen Isononansäurechlorid versetzt. Es wurde 5 h unter Stickstoff auf 130° C erhitzt. Dann wurden 0,5 Teile p-Tolulsulfonsäure zugesetzt und unter Überleiten von Stickstoff 10 h auf 212° C erhitzt, wobei im Stickstoffstrom 80 ml Trichlorbenzol abdestillieren. Zur Aufarbeitung wurde mit Toluol verdünnt und von nicht umgesetzter Ausgangsverbindung abfiltriert. Aus dem Filtrat wurden durch Säulenchromatographie mit Toluol und Chloroform 1,2 Teile Fluoreszensfarbstoff der Formel isoliert:

| Beispiel | Formel Xa (T) | $\lambda_{max.}$ (nm) |
|---|---|---|
| 59 | 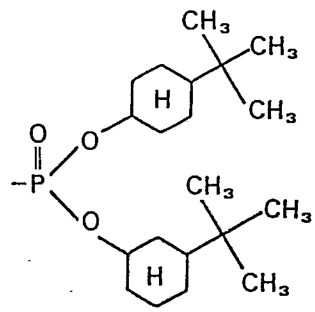 | 587 |
| 60 | 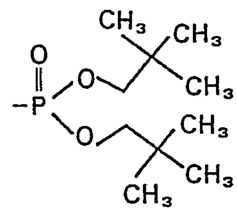 | 588 |
| 61 | 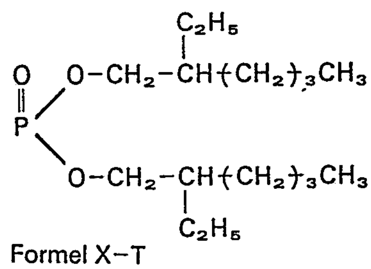 | 587 |
| 62 | Formel X–T 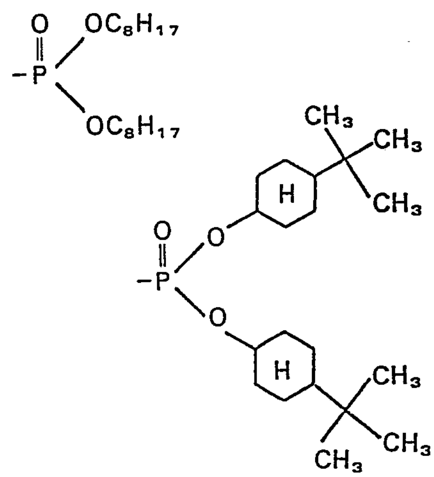 | 579 |
| 63 | | 581 |
| 64 | 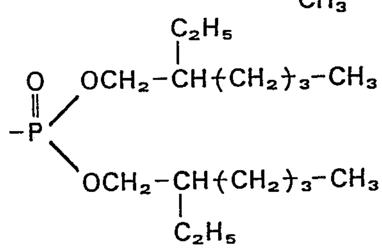 | 578 |
| 65 | 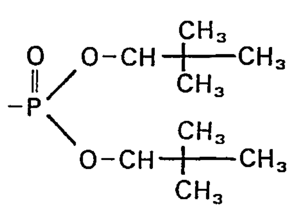 | 580 |

| Beispiel | Formel Xa (T) | $\lambda_{max.}$ (nm) |
|---|---|---|
| 66 | 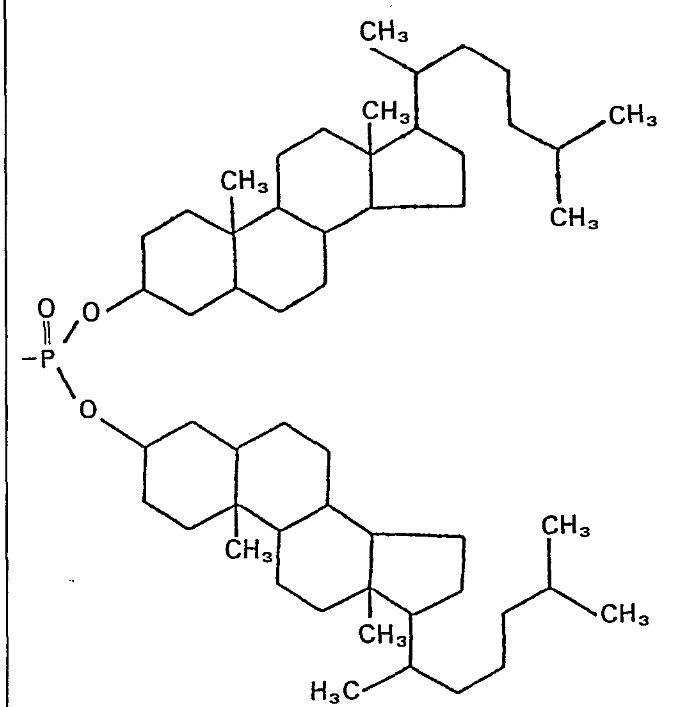 | 579 |

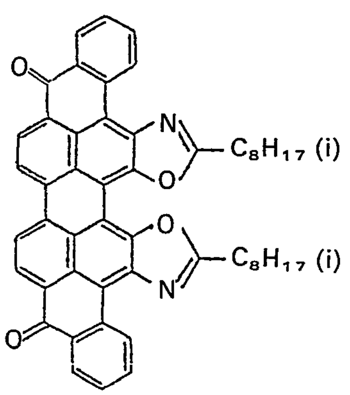

(i) $C_8H_{17}$ = 2,4,4-Trimethylpentyl

Smp.: 278° C

Verwendet man anstelle von Isononansäurechlorid Carbonsäurechloride von Carbonsäuren mit 7 bis 20 C-Atomen, dann erhält man die entsprechenden Oxazolverbindungen, die in der 2-Stellung des Oxazolringes $C_6$- bis $C_{20}$-Alkylgruppen als Substituenten tragen.

*Anwendungsbeispiel 26*

In geschmolzenem Polymethylmethacrylat werden 0,01% des Farbstoffs aus Beispiel 39 gelöst, homogen verteilt und zu Fluoreszenzplatten verarbeitet.

*Anwendungsbeispiel 27*

1000 Teile Polymethylmethacrylat (Granulat) werden mit 0,05 Teilen des Farbstoffs aus Beispiel 41 gleichmässig bepudert. Das Gemisch wird anschliessend zu Platten extrudiert.

*Anwendungsbeispiele 28 bis 63*

Entsprechend den Anwendungsbeispielen 26 oder 27 wurden Fluoreszenzplatten oder -folien hergestellt:

| Anwendungsbeispiel | Farbstoff aus Beispiel | Material |
|---|---|---|
| 28 | 42 | Polymethylmethacrylat |
| 29 | 43 | Polymethylmethacrylat |
| 30 | 44 | Polymethylmethacrylat |
| 31 | 45 | Polymethylmethacrylat |
| 32 | 46 | Polymethylmethacrylat |
| 33 | 47 | Polymethylmethacrylat |
| 34 | 48 | Polymethylmethacrylat |
| 35 | 49 | Polymethylmethacrylat |
| 36 | 49 | Polyvinylchlorid |
| 37 | 43 | Polystyrol |
| 38 | 45 | Polycarbonat |
| 39 | 50 | Polymethylmethacrylat |
| 40 | 51 | Polymethylmethacrylat |
| 41 | 52 | Polymethylmethacrylat |
| 42 | 53 | Polymethylmethacrylat |
| 43 | 54 | Polymethylmethacrylat |
| 44 | 55 | Polymethylmethacrylat |
| 45 | 56 | Polymethylmethacrylat |
| 46 | 57 | Polymethylmethacrylat |
| 47 | 58 | Polymethylmethacrylat |
| 48 | 59 | Polymethylmethacrylat |
| 49 | 60 | Polymethylmethacrylat |
| 50 | 61 | Polymethylmethacrylat |
| 51 | 62 | Polymethylmethacrylat |

| Anwendungsbeispiel | Farbstoff aus Beispiel | Material |
|---|---|---|
| 52 | 63 | Polymethylmethacrylat |
| 53 | 64 | Polymethylmethacrylat |
| 54 | 65 | Polymethylmethacrylat |
| 55 | 66 | Polymethylmethacrylat |
| 56 | 67 | Polymethylmethacrylat |
| 57 | 46 | Polystyrol |
| 58 | 50 | Polystyrol |
| 59 | 53 | Polystyrol |
| 60 | 56 | Polystyrol |
| 61 | 59 | Polystyrol |
| 62 | 62 | Polystyrol |
| 63 | 67 | Polystyrol |

**Patentansprüche**

1. Verfahren zur flächenmässigen Konzentrierung von Licht mittels fluoreszierender Verbindungen in Kunststoffplatten oder Folien, dadurch gekennzeichnet, dass man als fluoreszierende Verbindungen Verbindungen der Formeln

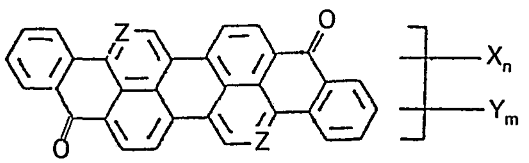

oder

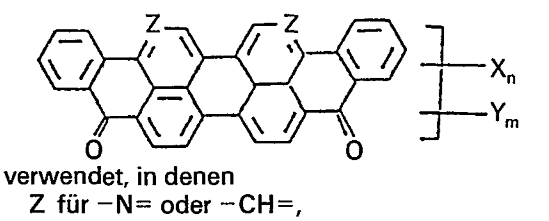

verwendet, in denen

Z für $-N=$ oder $-CH=$,

Y für $-OSO_2R^1$, $-\overset{O}{\overset{\|}{O}P}(OR^2)_2$, $-OCOR^1$ oder $-OR^3$, oder 2 Y für

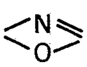 C−R, worin R $C_1$- bis $C_{18}$-Alkyl bedeutet,

X für Fluor, Chor, $C_1$- bis $C_{20}$-Alkyl, $C_3$- bis $C_{20}$-Alkenyl, Aralkyl, $-COR^1$, $-SO_2R^1$, $-PO(OR^2)_2$, $-NH-COR^1$ oder $-NH-SO_2R^1$,

m für 2, 3 oder 4,

n für 0, 1 oder 2,

$R^1$ für gegebenenfalls durch Fluor substituiertes $C_1$- bis $C_{20}$-Alkyl, $C_3$- bis $C_{20}$-Alkenyl, Aryl oder ein gegebenenfalls durch Chlor, Fluor, Cyan, $C_1$- bis $C_{20}$-Alkyl, $C_1$- bis $C_{20}$-Alkoxy, $C_1$- bis $C_{20}$-Alkoxycarbonyl oder Phenyl substituierter aromatischer oder heteroaromatischer Rest, wobei wenn Y $-OCOR^1$ ist, $R^1$ auch $-OR^{11}$ sein kann, worin $R^{11}$ $C_1$- bis $C_{18}$-Alkyl, durch 1, 2 oder 3 $C_3$- bis $C_{10}$-Alkyl substituiertes Cyclohexyl oder einen Rest eines gesättigten mono-, bi- oder polycyclischen $C_7$- bis $C_{30}$-Kohlenwasserstoffs bedeuten oder, wenn X $-COR^1$ ist, $R^1$ auch $C_1$- bis $C_{18}$-Alkoxy sein kann,

$R^2$ für $C_1$- bis $C_{18}$-Alkyl, durch 1 bis 3 $C_3$- bis $C_{10}$-Alkyl substituiertes Cyclohexyl oder für Reste von gesättigten mono-, bi- oder polycyclischen $C_7$- bis $C_{30}$-Kohlenwasserstoffen, worin das O-Atom an einem C-Atom eines carbocyclischen Ringes oder über eine $C_1$- bis $C_3$-Alkylengruppe an das Ringsystem gebunden ist,

$R^3$ für $C_1$- bis $C_{20}$-Alkyl, $C_3$- bis $C_{20}$-Alkenyl, $C_2$- oder $C_3$-Alkylencarbo-$C_1$- bis $C_{20}$-alkoxy, durch $C_3$- bis $C_{20}$-Alkyl substituiertes Benzyl, durch 1, 2 oder 3 $C_3$- bis $C_{10}$-Alkyl substituiertes Cyclohexyl, einen Rest von gesättigten mono-, bi- oder polycyclischen $C_7$- bis $C_{30}$-Kohlenwasserstoffen oder für Reste der Formeln

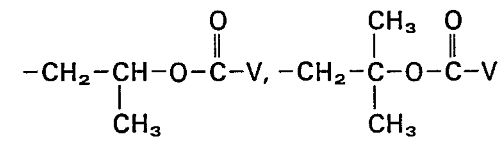

oder

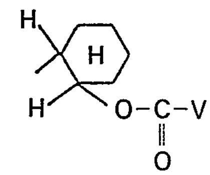

V für $C_8$- bis $C_{19}$-Alkyl, 4-$C_3$- bis $C_{20}$-Alkylphenyl oder für Reste von gesättigten mono-, bi- oder polycyclischen $C_7$- bis $C_{30}$-Kohlenwasserstoffen stehen.

2. Verfahren gemäss Anspruch 1, dadurch gekennzeichnet, dass in den Formeln Y $-O-CO-R^4$, $-O-CO-OR^4$, $-OR^4$ oder $-OSO_2-R^4$ bedeuten, worin $R^4$ für gegebenenfalls durch Fluor substituiertes $C_3$- bis $C_{20}$-Alkyl, durch 1 oder 2 $C_3$- bis $C_{10}$-Alkyl substituiertes Cyclohexyl, einen Rest von gesättigten bi- oder polycyclischen $C_7$- bis $C_{30}$-Kohlenwasserstoffen, oder – wenn $Y=-OR^4$ ist – $R^4$ für einen Rest der Formeln

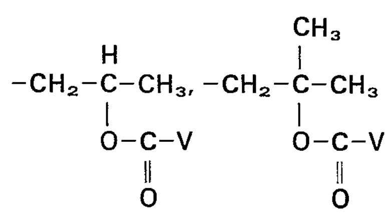

oder

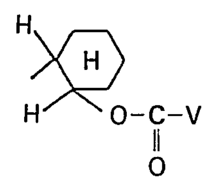

steht,

worin V die in Anspruch 1 angegebene Bedeutung hat.

3. Verfahren gemäss einem der beiden Ansprüche 1 oder 2, dadurch gekennzeichnet, dass n=0 ist.

4. Verfahren gemäss einem der Ansprüche 1, 2 oder 3, dadurch gekennzeichnet, dass Z=−CH= ist.

5. Verfahren gemäss einem der Ansprüche 1, 2, 3 oder 4, dadurch gekennzeichnet, dass die Substituenten im Isoviolanthrendion-(9,18) an den Stellen 6 und 15, 4 und 13 oder 2 und 11 oder in Violanthrendion-(5,10) an den Stellen 16 und 17, 15 und 18 oder 1, 14, 16 und 17 stehen.

6. Verfahren gemäss einem der Ansprüche 1, 2, 3 oder 4, dadurch gekennzeichnet, dass n=0 und m=2 ist und die Substituenten im Isoviolanthrendion-(9,18) an den Stellen 6 und 15 oder im Violanthrendion-(5,10) an den Stellen 16 und 17 stehen.

7. Verbindungen der Formel

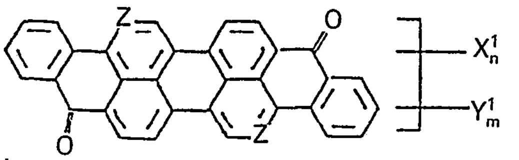

in der

Z für =N− oder =CH−,

$Y^1$ für $-OSO_2R^1$, $-O\overset{O}{\overset{\|}{P}}(OR^2)_2$, $-O\overset{O}{\overset{\|}{C}}-R^1$,

$-O-\overset{O}{\overset{\|}{C}}-OR^{11}$ oder $OR^3$,

$X^1$ für Fluor, Chlor, $C_1$- bis $C_{20}$-Alkyl, $C_3$- bis $C_{20}$-Alkenyl, Aralkyl, $-COR^1$, $-SO_2R^1$, $-\overset{O}{\overset{\|}{P}}(OR^2)_2$, $-NH-COR^1$ oder $-NH-SO_2R^1$,

m für 2, 3 oder 4,

n für 0, 1 oder 2,

$R^1$ für gegebenenfalls durch Fluor substituiertes $C_1$- bis $C_{20}$-Alkyl, $C_3$- bis $C_{20}$-Alkenyl oder für gegebenenfalls durch $C_1$- bis $C_{18}$-Alkyl substituiertes Phenyl,

$R^2$ für $C_1$- bis $C_{18}$-Alkyl, durch 1 oder 2 $C_3$- bis $C_{10}$-Alkyl substituiertes Cyclohexyl oder für einen gesättigten mono-, bi- oder polycyclischen $C_7$- bis $C_{30}$-Kohlenwasserstoffrest,

$R^3$ für $C_4$- bis $C_{20}$-Alkyl, $C_4$- bis $C_{20}$-Alkenyl, $C_2$- oder $C_3$-Alkylencarbonyl-$C_1$- bis $C_{20}$-Alkoxy oder durch $C_3$- bis $C_{20}$-Alkyl substituiertes Benzyl, durch 1 oder 2 $C_3$- bis $C_{10}$-Alkyl substituiertes Cyclohexyl, für V oder für einen Rest der Formeln

$$-CH_2-\underset{CH_3}{\underset{|}{\overset{H}{C}}}-O\overset{O}{\overset{\|}{C}}-V,\ -CH_2-C(CH_3)_2-O\overset{O}{\overset{\|}{C}}V$$

oder

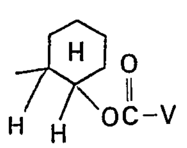

$R^{11}$ für $C_4$- bis $C_{20}$-Alkyl, durch 1 oder 2 $C_3$- bis $C_{10}$-Alkyl substituiertes Cyclohexyl, oder einen gesättigten mono-, bi- oder polycyclischen $C_7$- bis $C_{30}$-Kohlenwasserstoffrest, und

V für $C_8$- bis $C_{19}$-Alkyl, 4-$C_3$ bis $C_{20}$-Alkylphenyl oder einen gesättigten mono-, bi- oder polycyclischen $C_7$- bis $C_{30}$-Kohlenwasserstoffrest stehen,

mit Ausnahme von 6,15-Di-n-butoxy-5,14-diazaisoviolanthrendion-(9,18) und 6,15-Diisobutoxy-5,14-diazaisoviolanthrendion-(9,18).

8. Verbindungen der Formel

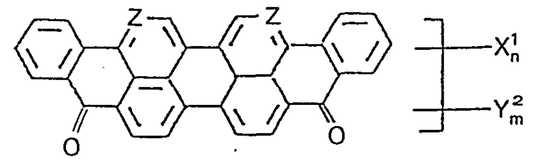

in der

Z für =N− oder =CH−, mindestens ein $Y^2$ für einen Rest der Formel $-OSO_2R^1$, $-O-\overset{O}{\overset{\|}{P}}(OR^2)_2$, $-O-CO-R^1$, $-OCO-OR^{11}$ oder $-OR^4$ und die restlichen $Y^2$ für $-OR^5$,

$X^1$ für Fluor, Chlor, $C_1$- bis $C_{20}$-Alkyl, $C_3$- bis $C_{20}$-Alkenyl, Aralkyl, $-COR^1$, $-SO_2R^1$, $-OP(OR^2)_2$, $-NH-COR^1$ oder $-NH-SO_2-R^1$,

n für 0, 1 oder 2,

m für 2, 3 oder 4,

$R^1$ für gegebenenfalls durch Fluor substituiertes $C_1$- bis $C_{20}$-Alkyl, $C_3$- bis $C_{20}$-Alkenyl oder für gegebenenfalls durch $C_1$- bis $C_{18}$-Alkyl substituiertes Phenyl,

$R^2$ für die in Anspruch 7 angegebene Bedeutung,

$R^4$ für $C_2$- oder $C_3$-Alkylencarbo-$C_1$- bis $C_{20}$-alkoxy, durch $C_3$- bis $C_{20}$-Alkyl substituiertes Benzyl, durch 1 oder 2 $C_2$- bis $C_{10}$-Alkyl substituiertes Cyclohexyl, für V oder für einen Rest der Formeln

$$-CH_2-\underset{CH_3}{\underset{|}{\overset{H}{C}}}-O\overset{O}{\overset{\|}{C}}-V,\ -CH_2-C(CH_3)_2-O\overset{O}{\overset{\|}{C}}V$$

oder

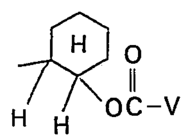

$R^{11}$ für $C_4$- bis $C_{20}$-Alkyl, durch 1 oder 2 $C_3$- bis $C_{10}$-Alkyl substituiertes Cyclohexyl, oder einen gesättigten mono-, bi- oder polycyclischen $C_7$- bis $C_{30}$-Kohlenwasserstoffrest, und

V für $C_8$- bis $C_{19}$-Alkyl, 4-$C_3$- bis $C_{20}$-Alkylphenyl oder einen gesättigten mono-, bi- oder polycyclischen $C_7$- bis $C_{30}$-Kohlenwasserstoffrest und $R^5$ für $C_4$- bis $C_{20}$-Alkyl stehen.

9. Verbindungen gemäss Anspruch 7, dadurch gekennzeichnet, dass Z für =CH−, n für 0 (null), m für 2, $R^3$ für $C_4$- bis $C_{20}$-Alkyl, $C_4$- bis $C_{20}$-Alkenyl, durch 1 oder 2 $C_3$- bis $C_{10}$-Alkyl substituiertes Cyclohexyl, für V oder für einen Rest der Formeln

$$-CH_2-\underset{CH_3}{\underset{|}{C}}H-O\overset{O}{\overset{\|}{C}}-V,\ -CH_2-C(CH_3)_2-O\overset{O}{\overset{\|}{C}}-V$$

oder

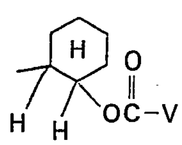

stehen,

wobei $R^1$, $R^2$, $R^{11}$ und V die in Anspruch 7 angegebene Bedeutung haben; wobei die Substituenten $Y^1$ in den Positionen 6 und 15 stehen.

10. Verbindungen gemäss Anspruch 8, dadurch gekennzeichnet, dass

Z für =CH−, n für 0 (null), m für 2,
$Y^2$ für einen Rest der Formeln

$$-OSO_2R^1,\ -O-\overset{\overset{O}{\|}}{P}(OR^2)_2,\ -O-\overset{\overset{O}{\|}}{C}-R^1,\ -O-\overset{\overset{O}{\|}}{C}-O-R^{11}$$ oder für $OR^4$, und

$R^4$ für durch 1 oder 23 $C_3$- bis $C_{10}$-Alkyl substituiertes Cyclohexyl, $C_4$- bis $C_{20}$-Alkyl, für V oder für einen Rest der Formeln

$$-CH_2-\underset{\underset{CH_3}{|}}{CH}-O-\overset{\overset{O}{\|}}{C}-V,\ -CH_2-C(CH_3)_2-O\overset{\overset{O}{\|}}{C}-V$$

oder 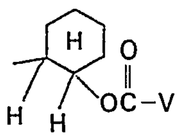

stehen,

wobei $R^1$, $R^2$, $R^{11}$ und V die in Anspruch 8 angegebene Bedeutung haben und die Substituenten $Y^2$ in den Positionen 16 und 17 stehen.

## Claims

1. A process for concentrating light over a particular area by means of a fluorescent compound in a plastic sheet or film, wherein the fluorescent compound used is that of the formula

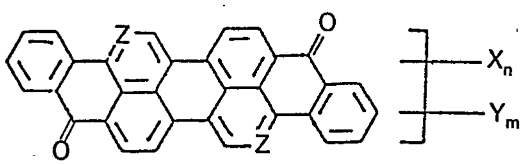

or

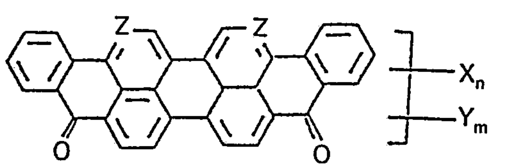

where

Z is =N− or =CH−,

Y is $-OSO_2R^1$, $-O\overset{\overset{O}{\|}}{P}(OR^2)_2$, $-OCOR^1$ or $-OR^3$, or 2 Ys together are 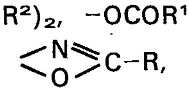,

where R is $C_1$- $C_{18}$-alkyl,

X is fluorine, chlorine, $C_1$-$C_{20}$-alkyl, $C_3$-$C_{20}$-alkenyl, aralkyl, $-COR^1$, $-SO_2R^1$, $-PO(OR^2)_2$, $-NH-COR^1$ or $-NH-SO_2R^1$,

m is 2, 3 or 4,

n is 0, 1 or 2,

$R^1$ is unsubstituted or fluorine-substituted $C_1$-$C_{20}$-alkyl, $C_3$-$C_{20}$-alkenyl, aryl or an aromatic or heteroaromatic radical which is unsubstituted or substituted by chlorine, fluorine, cyano, $C_1$-$C_{20}$-alkyl, $C_1$-$C_{20}$-alkoxy, $C_1$-$C_{20}$-alkoxycarbonyl or phenyl, and, when Y is $-OCOR^1$, $R^1$ may furthermore be $OR^{11}$ where $R^{11}$ is $C_1$-$C_{18}$-alkyl, cyclohexyl which is substituted by 1, 2 or 3 $C_3$-$C_{10}$-alkyl radicals, or a radical of a saturated mono-, bi- or polycyclic $C_7$-$C_{30}$-hydrocarbon, and when X is $-COR^1$, $R^1$ may furthermore be $C_1$-$C_{18}$-alkoxy,

$R^2$ is $C_1$-$C_{18}$-alkyl or is cyclohexyl which is substituted by from 1 to 3 $C_3$-$C_{10}$-alkyl radicals or is a radical of a saturated mono-, bi- or polycyclic $C_7$-$C_{30}$-hydrocarbon wherein the O atom is bonded to a carbon atom of a carbocyclic ring either directly or *via* a $C_1$-$C_3$-alkylene group,

$R^3$ is $C_1$-$C_{20}$-alkyl, $C_3$-$C_{20}$-alkenyl or $C_2$- or $C_3$-alkylenecarbo-$C_1$-$C_{20}$-alkoxy, or is benzyl which is substituted by $C_3$-$C_{20}$-alkyl, or is cyclohexyl which is substituted by 1, 2 or 3 $C_3$-$C_{10}$-alkyl radicals, or is a radical of a saturated mono-, bi- or polycyclic $C_7$-$C_{30}$-hydrocarbon, or a radical of the formula

$$-CH_2-\underset{\underset{CH_3}{|}}{CH}-O-\overset{\overset{O}{\|}}{C}-V,\ -CH_2-\underset{\underset{CH_3}{|}}{\overset{\overset{CH_3}{|}}{C}}-O-\overset{\overset{O}{\|}}{C}-V$$

or

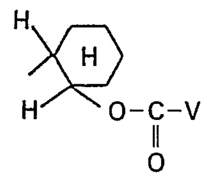

and V is $C_8$-$C_{19}$-alkyl, 4-($C_3$-$C_{20}$-alkyl)phenyl or a radical of a saturated mono-, bi- or polycyclic $C_7$-$C_{30}$-hydrocarbon.

2. A process as claimed in claim 1, wherein, in the formulae, Y is $-O-CO-R^4$, $-O-CO-OR^4$ or $-OR^4$ or $-OSO_2-R^4$, where $R^4$ is unsubstituted or fluorine-substituted $C_3$-$C_{20}$-alkyl or is cyclohexyl which is substituted by 1 or 2 $C_3$-$C_{10}$-alkyl radicals or a saturated bi- or polycyclic $C_7$-$C_{30}$-hydrocarbon radical, and when Y is $-OR^4$, $R^4$ may furthermore be a radical of the formula

$$-CH_2-\underset{\underset{\underset{O}{\|}}{O-C-V}}{\overset{H}{C}}-CH_3,\ -CH_2-\underset{\underset{\underset{O}{\|}}{O-C-V}}{\overset{\overset{CH_3}{|}}{C}}-CH_3$$

or 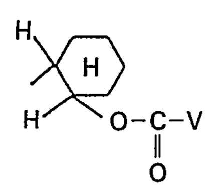

where V has the meanings given in claim 1.

3. A process as claimed in claim 1 or 2, wherein n is 0.

4. A process as claimed in claim 1, 2 or 3, wherein Z is −CH=.

5. A process as claimed in claim 1, 2, 3 or 4, wherein the substituents in isoviolanthrene-(9,18)-dione are in positions 6 and 15, 4 and 13 or 2 and 11, and those in violanthrene-(5,10)-dione

are in positions 16 and 17, 15 and 18 or 1, 14, 16 and 17.

6. A process as claimed in claim 1, 2, 3 or 4, wherein n is 0, m is 2, and the substituents in isoviolanthrene-(9,18)-dione are in positions 6 and 15 and those in violanthrene-(5,10)-dione are in positions 16 and 17.

7. A compound of the formula

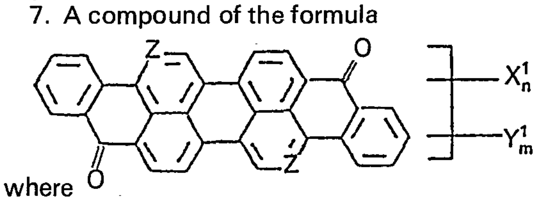

where

Z is =N− or =CH−,

$Y^1$ is $-OSO_2R^1$, $-O\overset{O}{\overset{\|}{P}}(OR^2)_2$, $-O\overset{O}{\overset{\|}{C}}-R^1$, $-O\overset{O}{\overset{\|}{C}}-OR^{11}$ or $OR^3$,

$X^1$ is fluorine, chlorine, $C_1$-$C_{20}$-alkyl, $C_3$-$C_{20}$-alkenyl, aralkyl, $-COR^1$, $-SO_2R^1$, $-P(OR^2)_2$, $-NH-COR^1$ or $-NH-SO_2R^1$,

m is 2, 3 or 4,

n is 0, 1 or 2,

$R^1$ is unsubstituted or fluorine-substituted $C_1$-$C_{20}$-alkyl, $C_3$-$C_{20}$-alkenyl, or unsubstituted or $C_1$-$C_{18}$-alkyl-substituted phenyl,

$R^2$ is $C_1$-$C_{18}$-alkyl, or is cyclohexyl which is substituted by 1 or 2 $C_3$-$C_{10}$-alkyl radicals or is a saturated mono-, bi- or polycyclic $C_7$-$C_{30}$-hydrocarbon radical,

$R^3$ is $C_4$-$C_{20}$-alkyl, $C_4$-$C_{20}$-alkenyl or $C_2$- or $C_3$-alkylenecarbo-$C_1$-$C_{20}$-alkoxy, or is $C_3$-$C_{20}$-alkyl-substituted benzyl, or is cyclohexyl which is substituted by 1 or 2 $C_3$-$C_{10}$-alkyl radicals, or is V or a radical of the formula

$$-CH_2-\underset{CH_3}{\overset{H}{C}}-O\overset{O}{\overset{\|}{C}}-V,\ -CH_2-C(CH_3)_2-O\overset{O}{\overset{\|}{C}}V$$

or

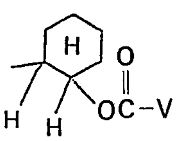

$R^{11}$ is $C_4$-$C_{20}$-alkyl or is cyclohexyl which is substituted by 1 or 2 $C_3$-$C_{10}$-alkyl radicals or is a saturated mono-, bi- or polycyclic $C_7$-$C_{30}$-hydrocarbon radical, and

V is $C_8$-$C_{19}$-alkyl, 4-($C_3$-$C_{20}$-alkyl)phenyl or a saturated mono-, bi- or polycyclic $C_7$-$C_{30}$-hydrocarbon radical,

excluding 6,15-di-n-butoxy-5,14-diazaisoviolanthrene-(9,18)-dione and 6,15-diisobutoxy-5,14-diazaisoviolanthrene-(9,18)-dione.

8. A compound of the formula

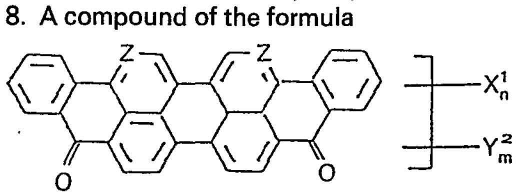

where

Z is =N− or =CH−,

at least one of the radicals $Y^2$ is a radical of the formula $-OSO_2R^1$, $-O-\overset{O}{\overset{\|}{P}}(OR^2)_2$, $-O-CO-R^1$, $-OCO-OR^{11}$ or $-OR^4$ and the remaining radicals $Y^2$ are each $-OR^5$,

$X^1$ is fluorine, chlorine, $C_1$-$C_{20}$-alkyl, $C_3$-$C_{20}$-alkenyl, aralkyl, $-COR^1$, $-SO_2R^1$, $-PO(OR^2)_2$, $-NH-COR^1$ or $-NH-SO_2-R^1$,

n is 0, 1 or 2,

m is 2, 3 or 4,

$R^1$ is unsubstituted or fluorine-substituted $C_1$-$C_{20}$-alkyl, $C_3$-$C_{20}$-alkenyl, or unsubstituted or $C_1$-$C_{18}$-alkyl-substituted phenyl,

$R^2$ has the meanings given in claim 7,

$R^4$ is $C_2$- or $C_3$-alkylenecarbo-$C_1$-$C_{20}$-alkoxy or is $C_3$-$C_{20}$-alkyl-substituted benzyl or is cyclohexyl which is substituted by 1 or 2 $C_2$-$C_{10}$-alkyl radicals or is V or a radical of the formula

$$-CH_2-\underset{CH_3}{\overset{H}{C}}-O\overset{O}{\overset{\|}{C}}-V,\ -CH_2-C(CH_3)_2-O\overset{O}{\overset{\|}{C}}V$$

or

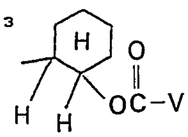

$R^{11}$ is $C_4$-$C_{20}$-alkyl or is cyclohexyl which is substituted by 1 or 2 $C_3$-$C_{10}$-alkyl radicals or is a saturated mono-, bi- or polycyclic $C_7$-$C_{30}$-hydrocarbon radical,

V is $C_8$-$C_{19}$-alkyl, 4-($C_3$-$C_{20}$-alkyl)phenyl or a saturated mono-, bi- or polycyclic $C_7$-$C_{30}$-hydrocarbon radical and $R^5$ is $C_4$-$C_{20}$-alkyl.

9. A compound as claimed in claim 7, wherein Z is =CH−, n is 0 (zero), m is 2, $R^3$ is $C_4$-$C_{20}$-alkyl or $C_4$-$C_{20}$-alkenyl or is cyclohexyl which is substituted by 1 or 2 $C_3$-$C_{10}$-alkyl radicals or is V or a radical of the formula

$$-CH_2-\underset{CH_3}{CH}-O\overset{O}{\overset{\|}{C}}-V,\ -CH_2-C(CH_3)_2-O\overset{O}{\overset{\|}{C}}-V$$

or

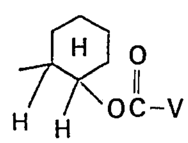

$R^1$, $R^2$, $R^{11}$ and V have the meanings given in claim 7, and the substituents $Y^1$ are in positions 6 and 15.

10. A compound as claimed in claim 8, wherein Z is =CH−, n is 0 (zero), m is 2,

$Y^2$ is a radical of the formula

$$-OSO_2R^1,\ -O-\overset{O}{\overset{\|}{P}}(OR^2)_2,\ -O-\overset{O}{\overset{\|}{C}}-R^1,\ -O-\overset{O}{\overset{\|}{C}}-O-R^{11}\text{ or }OR^4\text{, and}$$

$R^4$ is cyclohexyl which is substituted by 1 or 2 $C_3$-$C_{10}$-alkyl radicals or is $C_4$-$C_{20}$-alkyl, V or a radical of the formula

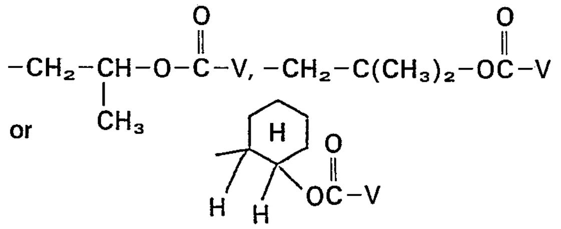

or

R[1], R[2], R[11] and V have the meanings given in claim 8, and the substituents $Y^2$ are in positions 16 and 17.

**Revendications**

1. Procédé pour la concentration bidimensionnelle de la lumière au moyen de composés fluorescents dans des plaques ou feuilles de matière synthétique, caractérisé en ce que l'on utilise, comme composés fluorescents, des composés répondant aux formules

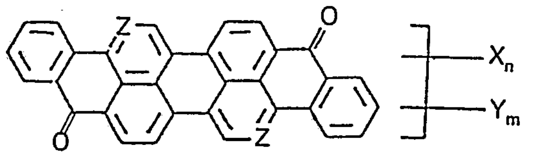

ou

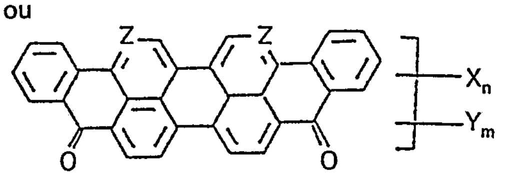

dans lesquelles

Z est mis pour $-N=$ ou $-CH=$,

Y pour $-OSO_2R^1$, $-\overset{\overset{O}{\|}}{O P}(OR^2)_2$, $-OCOR^1$ ou $-OR^3$ ou bien 2 Y sont mis pour 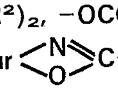C-R, R représentant un alcoyle en $C_1$ à $C_{18}$,

X est mis pour un fluor, un chlore, un alcoyle en $C_1$ à $C_{20}$, un alcényle en $C_3$ à $C_{20}$, un aralcoyle, $-COR^1$, $SO_2R^1$, $-PO(OR^2)_2$, $-NH-COR^1$ ou $-NH-SO_2R^1$,

m est mis pour 2, 3 ou 4,

n pour 0, 1 ou 2,

$R^1$ est mis pour un alcoyle en $C_1$ à $C_{20}$ éventuellement substitué par un fluor, pour un alcényle en $C_3$ à $C_{20}$, un aryle ou un radical aromatique ou hétéroaromatique éventuellement substitué par un chlore, un fluor, un cyano, un alcoyle en $C_1$ à $C_{20}$, un alcoxy en $C_1$ à $C_{20}$, un alcoxy (en $C_1$ à $C_{20}$)-carbonyle ou un phényle; lorsque Y est mis pour $-OCOR^1$, $R^1$ peut aussi représenter un groupe de formule $-OR^{11}$ dans laquelle $R^{11}$ est un alcoyle en $C_1$ à $C_{18}$, un cyclohexyle substitué par 1, 2 ou 3 alcoyles en $C_3$ à $C_{10}$ ou un radical d'un hydrocarbure mono-, bi- ou polycyclique saturé en $C_7$ à $C_{30}$ ou, lorsque X est mis pour $-COR^1$, $R^1$ peut être aussi un alcoxy en $C_1$ à $C_{18}$,

$R^2$ est mis pour un alcoyle en $C_1$ à $C_{18}$, un cyclohexyle substitué par 1 à 3 alcoyles en $C_3$ à $C_{10}$ ou pour un radical d'hydrocarbure mono-, bi- ou polycyclique saturé en $C_7$ à $C_{30}$ dans lequel l'atome de O est fixé à un atome de C d'un noyau carbocyclique ou, par l'intermédiaire d'un groupe alcoylène en $C_1$ à $C_3$, au système de noyaux,

$R^3$ est mis pour un alcoyle en $C_1$ à $C_{20}$, un alcényle en $C_3$ à $C_{20}$, un alcoylènecarboalcoxy contenant 2 ou 3 atomes de C dans le groupe alcoylène et 1 à 20 atomes de C dans le groupe alcoxy, un benzyle substitué par un alcoyle en $C_3$ à $C_{20}$, un cyclohexyle substitué par 1, 2 ou 3 alcoyles en $C_3$ à $C_{20}$, un radical d'hydrocarbures mono-, bi- ou polycycliques saturés en $C_7$ à $C_{30}$, ou pour un radical de formule

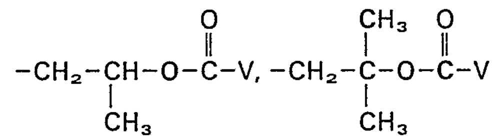

ou

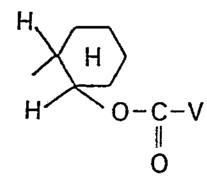

V est mis pour un alcoyle en $C_8$ à $C_{19}$, un 4-alcoyl (en $C_3$ à $C_{20}$)-phényle ou pour un radical d'hydrocarbure mono-, bi- ou polycyclique saturé en $C_7$ à $C_{30}$.

2. Procédé selon la revendication 1, caractérisé en ce que, dans les formules, Y représente $-O-CO-R^4$, $-O-CO-OR^4$, $-OR^4$ ou $-OSO_2-R^4$, $R^4$ étant mis pour un alcoyle en $C_3$ à $C_{20}$ éventuellement substitué par un fluor, un cyclohexyle substitué par 1 ou 2 alcoyles en $C_3$ à $C_{10}$, un radical d'hydrocarbure bi- ou polycyclique saturé en $C_7$ à $C_{30}$ ou, lorsque $Y=-OR^4$, $R^4$ est mis pour un radical de formule

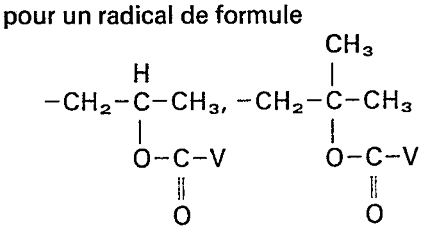

ou

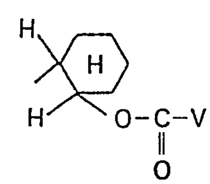

dans laquelle V a la signification donnée dans la revendication 1.

3. Procédé selon l'une des revendications 1 ou 2, caractérisé en ce que n=0.

4. Procédé selon l'une des revendications 1 à 3, caractérisé en ce que $Z=-CH=$.

5. Procédé selon l'une des revendications 1 à 4, caractérisé en ce que les substituants dans l'isoviolanthrènedione-(9,18) se trouvent dans les positions 6 et 15, 4 et 13 ou 2 et 11 et que, dans la violanthrènedione-(5,10), ils se trouvent dans les positions 16 et 17, 15 et 18 ou 1, 14, 16 et 17.

6. Procédé selon l'une des revendications 1 à 4, caractérisé en ce que n=0 et m=2 et en ce que les substituants se trouvent, dans l'isoviolanthrènedione-(9,18), dans les positions 6 et 15 ou, dans la violanthrènedione-(5,10), dans les positions 16 et 17.

7. Composés de formule

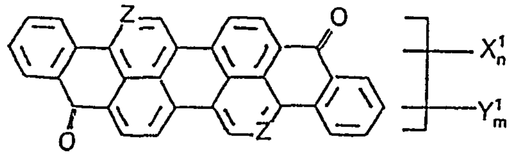

dans laquelle

Z est mis pour =N– ou =CH–,

$Y^1$ est mis pour $-OSO_2R^1$, $-O\overset{O}{\overset{\|}{P}}(OR)_2$, $-O\overset{O}{\overset{\|}{C}}-R^1$, $-O-\overset{O}{\overset{\|}{C}}-OR^{11}$ ou $OR^3$,

$X^1$ est mis pour un fluor, un chlore, un alcoyle en $C_1$ à $C_{20}$, un alcényle en $C_3$ à $C_{20}$, un aralcoyle, $-COR^1$, $-SO_2R^1$, $-P(OR^2)_2$, $-NH-COR^1$ ou $-NH-SO_2R^1$,

m est mis pour 2, 3 ou 4,

n pour 0, 1 ou 2,

$R^1$ pour un alcoyle en $C_1$ à $C_{20}$ éventuellement substitué par un fluor, pour un alcényle en $C_3$ à $C_{20}$ ou pour un phényle éventuellement substitué par un alcoyle en $C_1$ à $C_{18}$,

$R^2$ pour un alcoyle en $C_1$ à $C_{18}$, pour un cyclohexyle substitué par 1 ou 2 alcoyles en $C_3$ à $C_{10}$ ou pour un radical hydrocarboné mono-, bi- ou polycyclique saturé en $C_7$ à $C_{30}$,

$R^3$ est mis pour un alcoyle en $C_4$ à $C_{20}$, pour un alcényle en $C_4$ à $C_{20}$, pour un alcoylènecarbonylalcoxy contenant 2 ou 3 C dans le groupe alcoylène et 1 à 20 C dans le groupe alcoxy ou pour un benzyle substitué par un alcoyle en $C_3$ à $C_{20}$, pour un cyclohexyle substitué par 1 ou 2 alcoyles en $C_3$ à $C_{10}$, pour V ou pour un radical de formule

$$-CH_2-\underset{CH_3}{\underset{|}{\overset{H}{C}}}-O\overset{O}{\overset{\|}{C}}-V,\ -CH_2-C(CH_3)_2-O\overset{O}{\overset{\|}{C}}V$$

ou

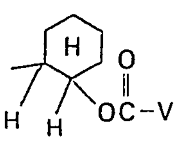

$R^{11}$ est mis pour un alcoyle en $C_4$ à $C_{20}$, pour un cyclohexyle substitué par 1 ou 2 alcoyles en $C_3$ à $C_{10}$ ou pour un radical hydrocarboné mono-, bi- ou polycyclique saturé en $C_7$ à $C_{30}$, et

V est mis pour un alcoyle en $C_8$ à $C_{19}$, pour un 4-alcoylphényle contenant 3 à 20 atomes de C dans le groupe alcoyle ou pour un radical hydrocarboné mono-, bi- ou polycyclique saturé en $C_7$ à $C_{30}$,

à l'exception de la 6,15-di-n-butoxy-5,14-diazaisoviolanthrènedione-(9,18) et de la 6,15-diisobutoxy-5,14-diazaisoviolanthrènedione-(9,18).

8. Composés de formule

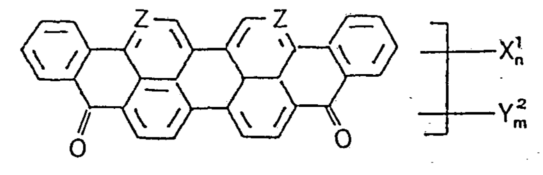

dans laquelle

Z est mis pour =N– ou =CH–,

au moins un $Y^2$ est mis pour un radical de formule $-OSO_2R^1$, $-O\overset{O}{\overset{\|}{P}}(OR^2)_2$, $-O-CO-R^1$, $-OCO-OR^{11}$ ou $-OR^4$ et les $Y^2$ restants sont mis pour $-OR^5$,

$X^1$ est mis pour un fluor, un chlore, un alcoyle en $C_1$ à $C_{20}$, un alcényle en $C_3$ à $C_{20}$, un aralcoyle, $-COR^1$, $-SO_2R^1$, $-P(OR^2)_2$, $-NH-COR^1$ ou $-NH-SO_2-R^1$,

n est mis pour 0, 1 ou 2,

m est mis pour 2, 3 ou 4,

$R^1$ est mis pour un alcoyle en $C_1$ à $C_{20}$ éventuellement substitué par un fluor, pour un alcényle en $C_3$ à $C_{20}$ ou pour phényle éventuellement substitué par un alcoyle en $C_1$ à $C_{18}$,

$R^2$ a la signification donnée dans la revendication 7,

$R^4$ est mis pour un alcoylènecarboalcoxy contenant 2 ou 3 atomes de C dans le groupe alcoylène et 3 à 20 atomes de C dans le groupe alcoxy, pour un benzyle substitué par un alcoyle en $C_3$ à $C_{20}$, pour un cyclohexyle substitué par 1 ou 2 alcoyles en $C_2$ à $C_{10}$, pour V ou pour un radical de formule

$$-CH_2-\underset{CH_3}{\underset{|}{\overset{H}{C}}}-O\overset{O}{\overset{\|}{C}}-V,\ -CH_2-C(CH_3)_2-O\overset{O}{\overset{\|}{C}}V$$

ou

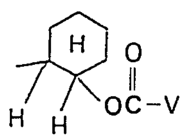

$R^{11}$ est mis pour un alcoyle en $C_4$ à $C_{20}$, pour un cyclohexyle substitué par 1 ou 2 alcoyles en $C_3$ à $C_{10}$ ou pour un radical hydrocarboné mono-, bi- ou polycyclique saturé en $C_7$ à $C_{30}$, et

V est mis pour un alcoyle en $C_8$ à $C_{19}$, pour un 4-alcoylphényle contenant 3 à 20 atomes de C dans le groupe alcoyle ou pour un radical hydrocarboné mono-, bi- ou polycyclique saturé en $C_7$ à $C_{30}$ et $R^5$ pour un alcoyle en $C_4$ à $C_{20}$.

9. Composés selon la revendication 7, caractérisée en ce que Z est mis pour =CH–, n pour 0 (zéro), m pour 2, $R^3$ pour un alcoyle en $C_4$ à $C_{20}$, un alcényle en $C_4$ à $C_{20}$, un cyclohexyle substitué par 1 ou 2 alcoyles en $C_3$ à $C_{10}$, pour V ou pour un radical de formule

$$-CH_2-\underset{CH_3}{\underset{|}{CH}}-O\overset{O}{\overset{\|}{C}}-V,\ -CH_2-C(CH_3)_2-O\overset{O}{\overset{\|}{C}}-V$$

ou

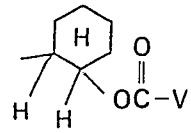

$R^1$, $R^2$, $R^{11}$ et V ayant les significations données dans la revendication 7, les substituants $Y^1$ se trouvant dans les positions 6 et 15.

10. Composés selon la revendication 8, caractérisés en ce que Z est mis pour =CH–, n pour 0 (zéro), m pour 2, $Y^2$ pour un radical de formule

$$-OSO_2R^1,\ -O-\overset{O}{\overset{\|}{P}}(OR^2)_2,\ -O-\overset{O}{\overset{\|}{C}}-R^1,$$

$$-O-\overset{O}{\overset{\|}{C}}-O-R^{11}$$ ou $OR^4$, et

$R_4$ est mis pour un cyclohexyle substitué par 1 ou 2 alcoyles en $C_3$ à $C_{10}$, pour un alcoyle en $C_4$ à $C_{20}$, pour V ou pour un radical de formule

$$-CH_2-\underset{CH_3}{\underset{|}{C}}H-O-\overset{O}{\overset{\|}{C}}-V,\ -CH_2-C(CH_3)_2-O\overset{O}{\overset{\|}{C}}-V$$

ou

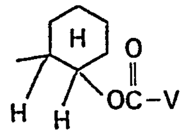

$R^1$, $R^2$, $R^{11}$ et V ayant les significations données dans la revendication 8 et les substituants $Y^2$ se trouvant dans les positions 16 et 17.